# EUROPEAN PATENT SPECIFICATION

(11) **EP 4 206 032 B1**
(45) Date of publication and mention of the grant of the patent: **16.04.2025**
(21) Application number: 20956116.6
(22) Date of filing: 24.12.2020
(51) Int. Cl.: B60L 53/80, B60L 50/62, B60L 50/61, B60L 58/12, B60S 5/06, B60L 53/66, B60L 53/64

(54) **ENERGY REPLENISHING METHOD AND MANAGEMENT SYSTEM FOR BATTERY REPLACEMENT-TYPE HYBRID VEHICLE**
ENERGIENACHFÜLLVERFAHREN UND VERWALTUNGSSYSTEM FÜR EIN HYBRIDFAHRZEUG MIT BATTERIEWECHSEL
PROCÉDÉ DE REMPLISSAGE D'ÉNERGIE ET SYSTÈME DE GESTION POUR VÉHICULE HYBRIDE DE TYPE À REMPLACEMENT DE BATTERIE

(30) Priority: 30.09.2020 CN 202011066317
(43) Date of publication of application: 05.07.2023
(73) Proprietor: Zhejiang Geely Holding Group Co., Ltd., Hangzhou, Zhejiang 310051 (CN)
(72) Inventor: LI, Shufu, Hangzhou, Zhejiang 310051 (CN)
(74) Representative: Osterhoff, Utz
(86) International application number: PCT/CN2020/139124
(87) International publication number: WO 2022/068100

(56) References cited:
- WO-A1-2018/000682
- WO-A1-2018/142168
- CN-A- 103 707 878
- CN-A- 104 973 057
- CN-A- 104 973 057
- CN-A- 106 476 643
- CN-A- 110 626 181
- CN-A- 110 626 181
- CN-A- 112 060 970
- CN-U- 211 106 988
- US-A1- 2012 109 519
- US-A1- 2015 226 566

## Description

### FIELD OF THE INVENTION

The present invention relates to the field of vehicle technologies, and particularly to an energy replenishing method and management system for a battery replacement-type hybrid vehicle.

### BACKGROUND OF THE INVENTION

Under dual pressure of energy conservation and emission reduction, a development of new energy automobiles becomes a necessary choice in the international society. An electric automobile is a product with a great prospect in new energy automobiles. However, since the current electric automobile has a short drive mileage, a consumer has mileage anxiety, which reduces willingness of the consumer to purchase the electric automobile to some extent.

In order to solve the mileage anxiety problem, various solutions are provided, and one effective solution is an electric automobile directly driven by a detachable replacement battery in conjunction with a fuel oil generator. However, currently, there is no method matched with such an electric automobile and providing a refueling or battery replacement strategy according to actual use conditions of the electric automobile, which is prone to cause a situation where the automobile does not have enough energy to reach a destination, or does not have enough energy to go to a filling station or a battery swapping station for refueling or battery replacement after reaching the destination, resulting in poor user experience.

CN211106988U discloses a battery replacement-type extended range electric vehicle, including a vehicle chassis, a battery box, a fuel generator and an electric power system. The battery box is arranged between the front and rear wheels of the vehicle chassis, and a detachable battery pack is arranged inside the battery box. The battery box is connected to the electric power system and the fuel generator respectively, and the internal battery set supplies power for the electric power system, and the electric energy generated by the fuel generator can be charged to the internal battery set. The fuel generator is connected to the electric power system, and the electric energy generated by the fuel generator can be directly provided to the electric power system. The battery set includes a plurality of battery cells, and the battery cells are provided with special identification numbers. The application can realize the replacement of the battery set to quickly obtain electric energy, and solve the problem of inconvenient charging.

CN103707878A discloses a hybrid power control method and a system based on itinerary planning. According to the control method, the route information from the location of the vehicle to the destination and the current remaining power (SOC) of the battery in the vehicle are obtained; the route information includes: road condition information and/or driving distance; and then the vehicle is controlled to start driving in battery power mode or internal combustion engine power mode according to the current remaining power; during the vehicle driving process, the method also monitors the part of the vehicle that has been driven according to the route information and the current remaining power of the battery, and switches the vehicle between the battery power mode and the internal combustion engine power mode according to the remaining part of the route information and the current remaining power of the battery. The application adjusts the control mode of the vehicle in real time according to the route information set by the user, which can increase the utilization rate of the battery power mode in the vehicle, thereby reducing the fuel consumption and driving cost of the vehicle.

WO2018/000682A1 discloses a method and a terminal for reminding a vehicle to refuel. The method includes: obtaining vehicle status information during vehicle driving, calculating and determining whether the current first remaining fuel volume supports the vehicle to reach a navigation destination based on the current first remaining fuel volume and the average fuel consumption per unit mileage in the vehicle status information; if so, calculating the second remaining fuel volume after the vehicle reaches the navigation destination, and calculating the next cruising distance corresponding to the second remaining fuel volume based on the average fuel consumption per unit mileage; detecting whether there is a station whose distance from the navigation destination is less than the next cruising distance, and if not, performing a corresponding vehicle refueling reminder.

### BRIEF DESCRIPTION OF THE INVENTION

In view of the above problems, there is provided an energy replenishing method and management system for a battery replacement-type hybrid vehicle which overcome or at least partially solve the above problems.

An object of the present invention is to provide an energy replenishing method and management system for a battery replacement-type hybrid vehicle, which can intelligently switch between a battery replacement-type drive system and/or an extended range drive system according to vehicle information and the distribution of nearby battery swapping stations and fuel refill stations, and determine a corresponding energy replenishing solution.

A further object of the present invention is to ensure that a vehicle still has sufficient energy to go to a battery swapping station or fuel refill station for energy replenishment after reaching a destination.

Still another object of the present invention is to provide a more accurate and rational energy replenishing solution.

Yet another object of the present invention is to provide a more personalized and safer energy replenishing solution for a user.

**In** particular, according to an aspect of embodiments of the present invention, there is provided an energy replenishing method for a battery replacement-type hybrid vehicle, wherein the vehicle is provided with a battery replacement-type drive system and an extended range drive system that can be rapidly switched and used separately as a main power system;
the extended range drive system includes a range extender and a drive motor;
the battery replacement-type drive system includes a rapid change battery and the drive motor, and the rapid change battery can be rapidly removed and replaced at a battery swapping station; and
the method includes:
   when a user starts up the vehicle, acquiring a real-time position of the vehicle and prompting the user to select a long-distance or short-distance drive or to set up a destination; and intelligently switching between the battery replacement-type drive system and/or the extended range drive system according to selection of the user; wherein
   the intelligently switching between the battery replacement-type drive system and/or the extended range drive system according to selection of the user includes:
      if the short-distance drive is selected or the destination falls within a short-distance drive range, acquiring distribution information of battery swapping stations near the vehicle, if there is a battery swapping station, switching to a battery replacement mode and using the battery replacement-type drive system, and if not, switching to an extended range mode and using the extended range drive system; and
      if the long-distance drive is selected or the destination falls within a long-distance drive range, determining a total expected driving quantity for the vehicle, and determining an energy replenishing solution and pushing same to the user according to real-time information of the vehicle and the distribution information of the battery swapping stations and fuel refill stations along the route of the long-distance drive of the vehicle;
      the real-time information of the vehicle includes a battery mounting state and a total remaining driving quantity;
      the energy replenishing solution includes energy replenishing solutions of a plurality of price intervals determined from low to high according to the distribution of the battery swapping stations and the fuel refill stations, a real-time fuel price and a real-time electricity price, which are provided for the user to select;
      the total expected driving quantity includes a first expected driving quantity by which the vehicle reaches the destination from the current position and a second expected driving quantity by which the vehicle reaches a target battery swapping station or a target fuel refill station around the destination from the destination;
      the battery mounting state of the vehicle includes a first mounting state indicating that the rapid change battery is mounted on the vehicle;
      in the first mounting state, the total remaining driving quantity is the sum of a first remaining driving quantity of the rapid change battery and a second remaining driving quantity of the range extender; and
      determining the energy replenishing solution according to real-time information of the vehicle and the distribution information of the battery swapping stations and fuel refill stations along the route of the long-distance drive of the vehicle includes:
         in the first mounting state, if the first remaining driving quantity is greater than or equal to the first expected driving quantity and the total remaining driving quantity is greater than or equal to the total expected driving quantity, determining that energy replenishment is not required for the vehicle; and
         if the first remaining driving quantity is greater than or equal to the first expected driving quantity and the total remaining driving quantity is less than the total expected driving quantity, determining that the vehicle is required to be replenished with energy during the drive to the destination, determining the corresponding energy replenishing solution and pushing the energy replenishing solution to the user.

Optionally, the method further includes a long-distance battery operation mode;
the determining an energy replenishing solution and pushing same to the user according to real-time information of the vehicle and the distribution information of the battery swapping stations and fuel refill stations along the route of the long-distance drive of the vehicle includes:
if there are few or none of the battery swapping stations in the recommended energy replenishing solution for the long-distance drive, recommending the long-distance battery operation mode to the user, prompting the user to remove the rapid change battery in a nearest battery swapping station, and driving at a high speed after a weight reduction.

Optionally, the method further includes a short-distance battery operation mode;
the determining an energy replenishing solution and pushing same to the user according to real-time information of the vehicle and the distribution information of the battery swapping stations and fuel refill stations along the route of the long-distance drive of the vehicle includes:
if the number of the battery swapping stations is large or a daily drive mileage is short in the recommended energy replenishing solution for the short-distance drive, recommending the short-distance battery operation mode to the user, prompting the user to remove a rapid change battery with a high capacity in a nearest battery swapping station and mounting a rapid change battery with a low capacity matched with the daily drive mileage.

Optionally, the first expected driving quantity, the second expected driving quantity, the first remaining driving quantity, and the second remaining driving quantity are expressed in mileage or time.

Optionally, determining the energy replenishing solution according to real-time information of the vehicle and the distribution information of the battery swapping stations and fuel refill stations along the route of the long-distance drive of the vehicle further includes:
in the first mounting state, if the first remaining driving quantity is greater than or equal to the product of the first expected driving quantity and a preset proportion threshold and less than the first expected driving quantity, and the total remaining driving quantity is greater than or equal to the total expected driving quantity, determining that the rapid change battery of the vehicle is required to be disassembled or replaced during the drive from the current position to the destination;
if the first remaining driving quantity is greater than or equal to the product of the first expected driving quantity and the preset proportion threshold and less than the first expected driving quantity, and the total remaining driving quantity is less than the total expected driving quantity, determining that the vehicle is required to be driven to a fuel refill station closest to the current position of the vehicle for refueling; and
if the first remaining driving quantity is less than the product of the first expected driving quantity and the preset proportion threshold, determining that the rapid change battery of the vehicle is required to be disassembled or replaced during the drive from the current position to the destination.

Optionally, the real-time information of the vehicle also includes road condition information between the current position of the vehicle and the destination;
before determining that the rapid change battery of the vehicle is required to be disassembled or replaced during the drive, the method further includes:
determining a congested road section according to the road condition information;
the determining that the rapid change battery of the vehicle is required to be disassembled or replaced during the drive includes:
   determining that the rapid change battery of the vehicle is required to be disassembled or replaced before the vehicle reaches the congested road section.

Optionally, the battery mounting state further includes a second mounting state indicating that the rapid change battery is disassembled from the vehicle;
the real-time information of the vehicle also includes road condition information between the current position of the vehicle and the destination; and
determining the energy replenishing solution according to real-time information of the vehicle and the distribution information of the battery swapping stations and fuel refill stations along the route of the long-distance drive of the vehicle further includes:
   in the second mounting state, judging whether a road between the current position of the vehicle and the destination is smooth in traffic according to the road condition information;
   if the road between the current position of the vehicle and the destination is not smooth in traffic, determining a congested road section according to the road condition information and acquiring a predicted congestion duration of the congested road section;
   judging whether the predicted congestion duration is greater than or equal to a preset time threshold, and if yes, determining that the vehicle is required to go to a battery swapping station to mount the rapid change battery before reaching the congested road section;
   if the road between the current position of the vehicle and the destination is smooth in traffic, judging whether the total remaining driving quantity is greater than or equal to the total expected driving quantity;
   if the total remaining driving quantity is greater than or equal to the total expected driving quantity, determining that energy replenishment is not required for the vehicle; and
   if the total remaining driving quantity is less than the total expected driving quantity, determining that the vehicle is required to be driven to a fuel refill station closest to the current position of the vehicle for refueling, or driven to a battery swapping station closest to the current position of the vehicle to mount the rapid change battery.

Optionally, the total remaining driving quantity of the vehicle is obtained by:
acquiring a remaining energy amount and current driving parameters of the vehicle, and calculating an original total remaining driving quantity according to the remaining energy amount and the current driving parameters; and
acquiring user habit parameters of the vehicle, and correcting the original total remaining driving quantity according to the user habit parameters to obtain the total remaining driving quantity.

Optionally, before determining the total expected driving quantity of the vehicle, the method further includes:
determining the destination and an expected drive path of the vehicle according to historical driving data of the vehicle and a current time and/or the current position of the vehicle;
the determining the total expected driving quantity of the vehicle includes:
   determining the total expected driving quantity of the vehicle according to the current position of the vehicle, the destination, the expected drive path and the distribution of the battery swapping stations and the fuel refill stations around the destination.

According to another aspect of the embodiments of the present invention, there is further provided an energy replenishing management system for a battery replacement-type hybrid vehicle, wherein the vehicle is provided with a battery replacement-type drive system and an extended range drive system that can be rapidly switched and used separately as a main power system;
the extended range drive system includes a range extender and a drive motor;
the battery replacement-type drive system includes a rapid change battery and the drive motor, and the rapid change battery can be rapidly removed and replaced at a battery swapping station; and
the system includes:
   an information acquiring unit configured to, when a user starts up the vehicle, acquire a real-time position of the vehicle and prompt the user to select a long-distance or short-distance drive or to set up a destination; and
   an operation switching unit configured to, according to the selection of the user, intelligently switch between the battery replacement-type drive system and/or the extended range drive system; wherein
   the operation switching unit is further configured to:
      if the short-distance drive is selected or the destination falls within a short-distance drive range, trigger the information acquiring unit to acquire distribution information of battery swapping stations near the vehicle, if there is a battery swapping station, switch to a battery replacement mode and use the battery replacement-type drive system, and if not, switch to an extended range mode and use the extended range drive system; and
      if the long-distance drive is selected or the destination falls within a long-distance drive range, determine a total expected driving quantity for the vehicle, and determine an energy replenishing solution and push same to the user according to real-time information of the vehicle and the distribution information of the battery swapping stations and fuel refill stations along the route of the long-distance drive of the vehicle.

The energy replenishing method and management system for a battery replacement-type hybrid vehicle according to the embodiments of the present invention are applied to the battery replacement-type hybrid vehicle adopting the rapid change battery in conjunction with the range extender, can intelligently switch between the battery replacement-type drive system and/or the extended range drive system according to vehicle information and the distribution of nearby battery swapping stations and fuel refill stations, and determine the corresponding energy replenishing solution, so that the vehicle can drive to the destination normally, and replenish energy normally, thus ensuring the normal use of the vehicle;
the real-time information of the vehicle includes a battery mounting state and a total remaining driving quantity;
the energy replenishing solution includes energy replenishing solutions of a plurality of price intervals determined from low to high according to the distribution of the battery swapping stations and the fuel refill stations, a real-time fuel price and a real-time electricity price, which are provided for the user to select.

Further, for the energy replenishing method and management system according to the embodiments of the present invention, when the energy replenishing solution is determined, under the condition that the residual capacity of the rapid change battery is enough to support the vehicle to reach the destination, whether the total remaining driving quantity of the vehicle can satisfy the sum of the first expected driving quantity of the vehicle from the current position to the destination and the second expected driving quantity of the vehicle from the destination to the target energy replenishing station (target battery swapping station or target fuel refill station) around the destination is considered; that is, whether the remaining energy of the vehicle after reaching the destination is enough for the vehicle to reach the target energy replenishing station is considered, such that the vehicle is ensured to have enough energy to go to the energy replenishing station for energy replenishment after reaching the destination, and the problem of insufficient energy after the vehicle reaches the destination is avoided.

Further, for the energy replenishing method and management system according to the embodiments of the present invention, when the energy replenishing solution is determined, a more precise and reasonable energy replenishing solution may be provided by combining different battery mounting states, expected driving quantities, remaining driving quantities and road condition information of the vehicle, thereby further ensuring the normal use of the vehicle.

Further, for the energy replenishing method and management system according to the embodiments of the present invention, when the energy replenishing solution is determined, the remaining driving quantity of the vehicle may be corrected and/or the expected driving quantity may be determined according to habits of the user, thereby providing a more personalized and safer energy replenishing solution for the user.

The foregoing description merely briefly describes the technical solution of the present invention. To more clearly understand the technical means of the present invention, to implement technical means of the present invention according to content of the specification, and to make the foregoing and other objectives, characteristics, and advantages of the present invention more comprehensible, particular embodiments of the present invention are described below.

According to the following detailed description of specific embodiments of the present invention in conjunction with drawings, those skilled in the art will better understand the aforementioned and other objects, advantages and features of the present invention.

### BRIEF DESCRIPTION OF THE DRAWINGS

Some specific embodiments of the present invention will be described below in detail in an exemplary rather than restrictive manner with reference to the drawings. Identical reference numerals in the drawings represent identical or similar components or parts. Those skilled in the art should understand that these drawings are not necessarily drawn to scale. In the drawings:
Fig. 1 shows a schematic structural diagram of a battery replacement-type hybrid vehicle according to an example of the present invention;
Fig. 2 shows a schematic structural diagram of a battery replacement-type hybrid vehicle according to another example of the present invention;
Fig. 3 shows a schematic structural diagram of a battery replacement-type hybrid vehicle according to still another example of the present invention;
Fig. 4 shows a schematic structural diagram of a battery replacement-type hybrid vehicle according to yet another example of the present invention;
Fig. 5 shows a schematic sectional diagram of a rapid change device in a locked state in an example of the present invention;
Fig. 6 shows a schematic sectional diagram of a rapid change device in an unlocked state in an example of the present invention;
Fig. 7 shows a schematic flow diagram of an energy replenishing method for a battery replacement-type hybrid vehicle according to an embodiment of the present invention;
Fig. 8 shows a schematic flow diagram of a step of determining an energy replenishing solution according to real-time information of a vehicle and distribution information of battery swapping stations and fuel refill stations along the route of a long-distance drive of the vehicle according to an embodiment of the present invention;
Fig. 9 shows a schematic flow diagram of a step of determining an energy replenishing solution according to real-time information of a vehicle and distribution information of battery swapping stations and fuel refill stations along the route of a long-distance drive of the vehicle according to another embodiment of the present invention;
Fig. 10 shows a schematic flow diagram of a step of determining an energy replenishing solution according to real-time information of a vehicle and distribution information of battery swapping stations and fuel refill stations along the route of a long-distance drive of the vehicle according to still another embodiment of the present invention; and
Fig. 11 shows a schematic structural diagram of an energy replenishing management system for a battery replacement-type hybrid vehicle according to an embodiment of the present invention.

### DETAILED DESCRIPTION

Exemplary embodiments of the present disclosure will be described in more detail below with reference to the accompanying drawings. While exemplary embodiments of the present disclosure are shown in the drawings, it should be understood that the present disclosure may be embodied in various forms and should not be limited by the embodiments set forth herein. Rather, these embodiments are provided such that this disclosure will be thoroughly understood, and will fully convey the scope of the disclosure to those skilled in the art.

In order to solve the above technical problems, an embodiment of the present invention provides an energy replenishing method for a battery replacement-type hybrid vehicle. The energy replenishing method according to the embodiment of the present invention can be applied to a battery replacement-type hybrid vehicle 100 with the following structure.

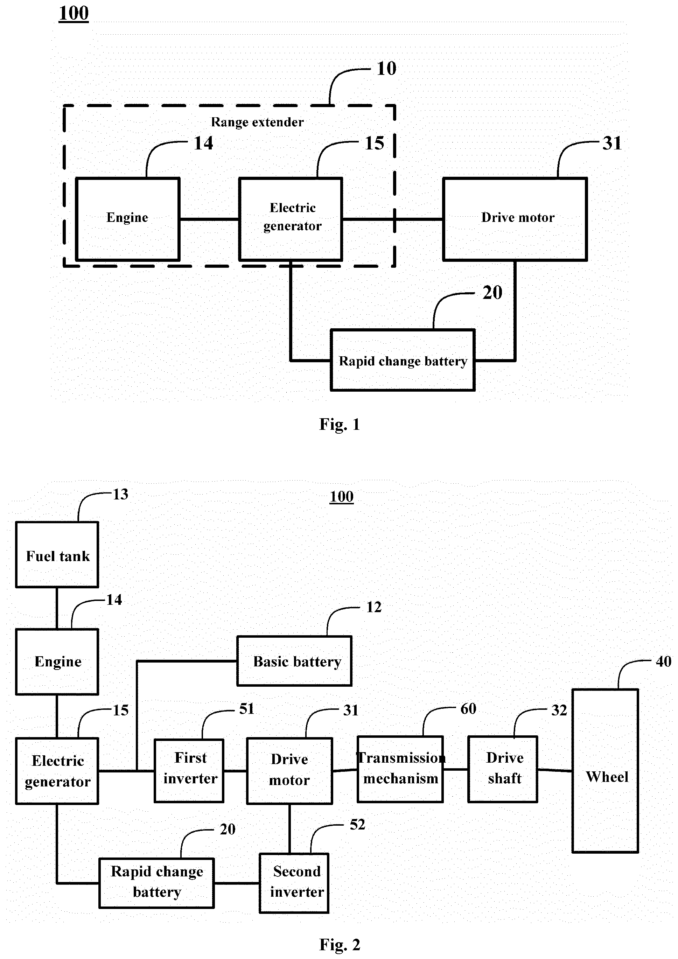

Fig. 1 shows a schematic structural diagram of a battery replacement-type hybrid vehicle 100 according to an example of the present invention. Referring to Fig. 1, the battery replacement-type hybrid vehicle 100 may at least include an extended range drive system formed of a range extender 10 and a drive motor 31, as well as a rapid change battery 20. The range extender 10 is formed of an engine 14 and an electric generator 15. The range extender 10 may be connected to the drive motor 31, and the electric generator 15 generates electricity under driving of power output from the engine 14, so as to supply electric energy to the drive motor 31. The rapid change battery 20 can be quickly disassembled and swapped in a battery swapping station, so as to quickly supplement electric energy. In practical applications, for example, after a power-poor rapid change battery 20 is disassembled by a battery swapping tool, a fully-charged rapid change battery 20 is mounted in the hybrid vehicle 100 to replace the rapid change battery 20. The rapid change battery 20 is connected to the drive motor 31 to form a battery replacement-type drive system. The range extender 10 and the rapid change battery 20 can supply electric energy to the drive motor 31 independently of each other; that is, either one of the range extender 10 and the rapid change battery 20 can supply electric energy to the drive motor 31 alone in a situation where the other does not work and cannot supply electric energy, and therefore, the battery replacement-type drive system 1 and the extended range drive system 2 can be switched quickly and individually serve as a main power system of the battery replacement-type hybrid vehicle 100. The rapid change battery 20 may also be connected to the range extender 10 (specifically, to the electric generator 15), so as to receive and store excess electric energy when the range extender 10 works.

The battery replacement-type hybrid vehicle 100 according to the embodiment of the present invention includes the extended range drive system formed of the range extender 10 and the drive motor 31, as well as the battery replacement-type drive system formed of the rapid change battery 20 and the drive motor 31, and the rapid change battery 20 can be quickly disassembled and swapped in the battery swapping station. Since the battery replacement-type drive system and the extended range drive system can be quickly switched and independently serve as a main power system, the extended range drive system taking the range extender 10 as a power source and/or the battery replacement-type drive system taking the rapid change battery 20 as the power source can be freely and flexibly switched according to a use scene and economy to drive the vehicle to drive.

Specifically, for example, for a non-long-distance drive scene (such as a drive in an urban area), when a price (such as oil price) of fuel used by the range extender 10 is low, the range extender 10 is used to supply electric energy to the drive motor 31, and when an electricity price is relatively low, the rapid change battery 20 is used and swapped in the battery swapping station for use, so as to guarantee electric energy supply to the drive motor 31. For a long-distance drive scene, fuel can be fully loaded to ensure that fuel supply of the range extender 10 is sufficient, and meanwhile, the rapid change battery 20 can be swapped in the battery swapping station for use, so as to obtain a maximum endurance mileage.

Referring to Fig. 2, in one example of the present invention, the extended range drive system may further include a basic battery 12. The basic battery 12 is connected to the range extender 10 (specifically, to the electric generator 15) and the drive motor 31. The basic battery 12 may be, for example, a conventional power battery. By arranging the double batteries of the basic battery 12 and the rapid change battery 20, a plurality of different arrangements of the basic battery 12 and the rapid change battery 20 can be adopted, such that switching and use of the extended range drive system and the battery replacement-type drive system are more diversified, thus further improving the use flexibility of the battery replacement-type hybrid vehicle 100 in different scenes. The different arrangements of the basic battery 12 and the rapid change battery 20 will be described below.

In one example the basic battery 12 and the rapid change battery 20 are provided on the vehicle 100 at the same time. The basic battery 12 is fixed on the vehicle 100, and the rapid change battery 20 is provided on the vehicle 100 in a quickly detachable and replaceable mode.

In this case, when the vehicle 100 is powered by the extended range drive system, the drive motor 31 is supplied with electric energy from the basic battery 12 when the basic battery 12 is sufficiently charged. When the basic battery 12 is short of charge, the engine 14 starts to operate, and charges the basic battery 12 while supplying electric energy to the drive motor 31 through the electric generator 15. If the vehicle 100 encounters high load conditions, such as an upslope, rapid acceleration, or the like, the range extender 10 and the basic battery 12 simultaneously supply electric energy to the drive motor 31. During conditions, such as a downslope, sliding, or the like, the drive motor 31 can be used as an electric generator to charge the basic battery 12, so as to achieve a function of recovering kinetic energy. When the vehicle 100 is powered by the battery replacement-type drive system, the rapid change battery 20 directly supplies electric energy to the drive motor 31. In the present embodiment, the range extender 10 and the rapid change battery 20 can be quite conveniently switched and used as a power source according to the fuel price and the electricity price in the non-long-distance drive scene, and meanwhile, the maximum endurance mileage in the long-distance drive scene can be guaranteed.

In another example the basic battery 12 and the rapid change battery 20 are provided on the vehicle 100 at the same time, where the basic battery 12 is provided on the vehicle 100 in a quickly detachable and replaceable mode, and the rapid change battery 20 is also provided on the vehicle 100 in a quickly detachable and replaceable mode. In this case, the basic battery 12 and the rapid change battery 20 can be detached or swapped in the battery swapping station, such that this embodiment can reduce fuel consumption to the greatest extent, and is quite suitable for use requirements when the fuel price is high and the electricity price is low. In addition, the maximum endurance mileage of the vehicle 100 is also increased to some extent.

In still another example the basic battery 12 and the rapid change battery 20 of the vehicle 100 may be arranged in pairs in the following manner: when one of the basic battery 12 and the rapid change battery 20 is provided on the vehicle 100, the other is provided in the battery swapping station for circulation and charging. Specifically, there exist the following two situations.

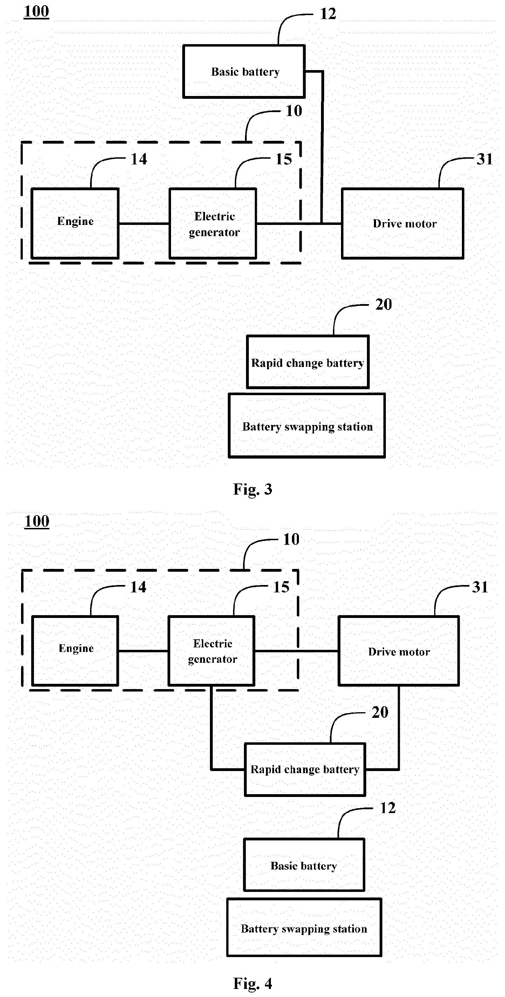

First situation: referring to Fig. 3, the basic battery 12 is provided on the vehicle 100, and the rapid change battery 20 is provided in the battery swapping station for circulation and charging. This situation is particularly suitable for a use scene when the fuel price is low and the requirement for the endurance mileage is low (such as the drive in the urban area), and at this point, the rapid change battery 20 is disassembled and placed to the battery swapping station for operation, such that on the one hand, an overall weight of the vehicle 100 is reduced, and on the other hand, an operation time of the rapid change battery 20 is increased, and a use efficiency of the rapid change battery 20 is improved.

Second situation: referring to Fig. 4, the rapid change battery 20 is provided on the vehicle 100, and the basic battery 12 is provided in the battery swapping station for circulation and charging. This situation is particularly suitable for the use scene where the fuel price is high, a certain endurance mileage is required and a layout of the battery swapping stations is sufficient. At this point, the basic battery 12 is dismounted and placed to the battery swapping station for operation, such that the overall weight of the vehicle 100 is reduced to a certain extent, thereby improving an energy utilization efficiency of the rapid change battery 20.

With continued reference to Fig. 2, in one example of the present invention, the extended range drive system may further include a fuel tank 13. The fuel tank 13 is connected to the engine 14 of the range extender 10 and configured to supply the engine 14 with fuel.

In practical applications, the fuel stored in the fuel tank 13 depends on the type of the engine 14 of the range extender 10. Generally, the fuel in the fuel tank 13 may include gasoline, diesel, methanol, ethanol, biofuel, natural gas, hydrogen, or the like. Correspondingly, the engine 14 may be a gasoline engine, a diesel engine, a methanol engine, or the like.

To further enhance the use flexibility of the rapid change battery 20, in some embodiments, the rapid change battery 20 may be designed to have various capacities and weights. Through the design, the rapid change batteries 20 with different capacities and weights can be swapped and used according to actual application requirements under different use scenes, so as to maximize the energy efficiency and economy. For example, during a long-distance drive, the fuel tank 13 can be filled with fuel, and meanwhile, a high-capacity rapid change battery 20 can be mounted on the vehicle for use through the battery swapping station, so as to obtain a greater endurance mileage. When the vehicle is driven in the urban area and the layout of the battery swapping stations in the urban area is sufficient, a rapid change battery 20 with a small capacity and a small weight can be mounted on the vehicle for use through the battery swapping station, so as to reduce a no-load weight.

In one example of the present invention, the capacity of the rapid change battery 20 may be less than 2 times a total amount of available electric energy of the range extender 10. The total amount of the available electric energy of the range extender 10 refers to the maximum total amount of electric energy which can be supplied by the range extender 10 when the fuel tank 13 is full of fuel. Such an arrangement makes the electric energy provided by the range extender 10 close to that of the rapid change battery 20, and breaks through a design that the range extender is usually only used as a secondary auxiliary power source in the prior art, such that the rapid change battery 20 and the range extender 10 can be mutually backed up and independently used as a main power source.

Preferably, the capacity of the rapid change battery 20 may be greater than 0.5 times and less than 2 times the total amount of the available electric energy of the range extender 10. More preferably, the capacity of the rapid change battery 20 is 0.5 to 1.5 times the total amount of the available electric energy of the range extender 10. Even more preferably, the capacity of the rapid change battery 20 is 1 time the total amount of the available electric energy of the range extender 10; that is, the capacity of the rapid change battery 20 is equal to the total amount of the available electric energy of the range extender 10. By such a design, the range extender 10 can no longer be used only as an auxiliary power energy system, and the switching between the range extender 10 and the rapid change battery 20 in use is more flexible and freer.

In some examples the capacity of the basic battery 12 may be in the range of 1-1.47kwh. In this case, since the capacity of the basic battery 12 is much less than the capacity (generally, 15-60kwh) of the conventional power battery used in the hybrid vehicle, and correspondingly, the weight of the basic battery 12 is greatly reduced compared with the weight of the conventional power battery, on the one hand, the weight of the whole vehicle can be effectively reduced, and the energy utilization efficiency can be improved, and on the other hand, an external charging function is not required to be considered for the small-capacity basic battery 12, which is beneficial to cost control and layout selection.

In other examples the capacity of the basic battery 12 may be in the range of 1.47-5.5kwh. In this case, the capacity (i.e., energy density) of the basic battery 12 is appropriately increased, and the endurance mileage of the hybrid vehicle 100 is increased to some extent, but meanwhile, the capacity of the basic battery 12 is still much less than the capacity of the power battery conventionally used in the hybrid vehicle, thus achieving better balance between the battery capacity and the entire vehicle weight.

With continued reference to Fig. 2, in one example of the present invention, the vehicle 100 may further include an inverter. Specifically, the inverter may include a first inverter 51 provided between the basic battery 12 and the drive motor 31 and between the electric generator 15 and the drive motor 31, and a second inverter 52 provided between the rapid change battery 20 and the drive motor 31. Functions of the inverter herein should be well known to those skilled in the art and will not be repeated herein.

In one example of the present invention, the vehicle 100 may further include a transmission mechanism 60 and a drive shaft 32. The drive shaft 32 is connected to a wheel 40 of the vehicle 100. The transmission mechanism 60 may be provided between the drive motor 31 and the drive shaft 32; that is, the drive motor 31 is connected to the drive shaft 31 through the transmission mechanism 60, and a driving force generated by the drive motor 31 is transmitted to the drive shaft 32 through the transmission mechanism 60 to drive the wheel 40 to rotate.

In one example of the present invention, a rapid change device 70 may be further provided on the vehicle 100. One end of the rapid change device 70 may be connected with a lower vehicle body of the vehicle 100, and the other end of the rapid change device is connected with the basic battery 12 or the rapid change battery 20. The rapid change device 70 can be configured to quickly dismount and mount the basic battery 12 or the rapid change battery 20.

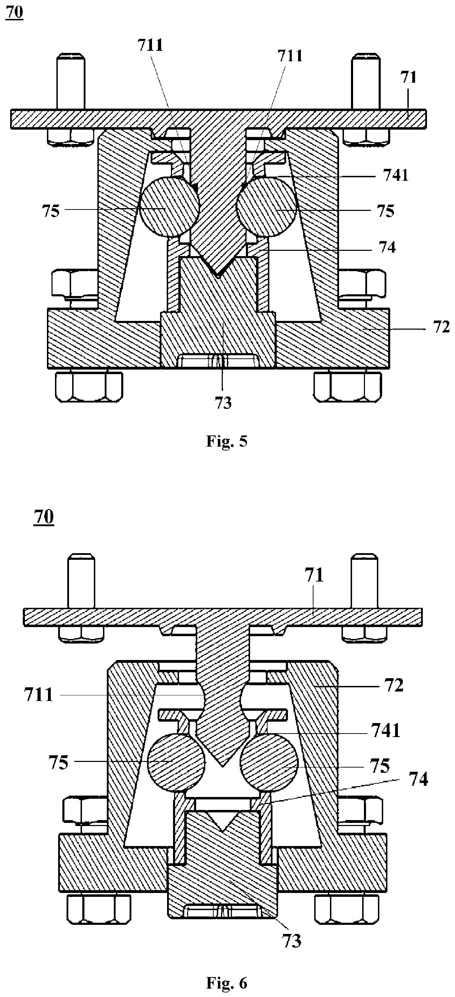

Referring to Figs. 5 and 6, in a specific implementation, the rapid change device 70 may include a limiting pin shaft 71, a housing 72, a bolt 73, a support rod 74, and a limiting ball 75. One end of the limiting pin shaft 71 is connected with the lower vehicle body of the vehicle 100. The housing 72 is connected to the basic battery 12 or the rapid change battery 20 and has a cavity with a trapezoidal structure therein. Specifically, the housing 72 is located at an edge of the basic battery 12 or the rapid change battery 20, and the housing 72 and the basic battery 12 or the rapid change battery 20 are connected by bolts at left and right sides of a lower portion of the housing 72. The bolt 73 is located at a lower portion of the cavity, extends into the cavity, and is in threaded connection to the housing 72. The support rod 74 is located in the cavity and supported in the cavity by the bolt 73 and is able to move up and down with the bolt 73 relative to the housing 72. The limiting ball 75 is located in a middle portion of the support rod 74. A middle portion of the limiting pin shaft 71 has a recess 711 depressed toward an axial direction thereof, the support rod 74 is hollow and has a notch 741 at a position corresponding to the recess 711, and the limiting ball 75 is matched with the notch 741. When the rapid change device 70 is in a locked state, the limiting pin shaft 71 is inserted into the support rod 74, and the limiting ball 75 is caught in the recess 711.

When the basic battery 12 or the rapid change battery 20 is required to be mounted on the vehicle 100, the limiting pin shaft 71 is separated from the housing 72, a jacking mechanism conveys the basic battery 12 or the rapid change battery 20 to a position of a lower portion of a vehicle body close to the limiting pin shaft 71, and at this point, the limiting pin shaft 71 is inserted into the housing 72, but the recess 711 on the limiting pin shaft 71 and the limiting ball 75 are not on the same horizontal plane; that is, the limiting ball 75 is not caught in the recess 711, and the limiting ball 75 is located in the notch 741 on the support rod 74. Therefore, if the basic battery 12 or the rapid change battery 20 is required to be mounted on the vehicle 100, the bolt 73 is required to drive the support rod 74 and the limiting ball 75 to move upwards relative to the housing 72 together until the limiting ball 75 is caught in the recess 711. In this way, by catching the limiting ball 75 in the recess 711, the rapid change device 70 is in the locked state (as shown in Fig. 5), and thus, the basic battery 12 or the rapid change battery 20 is mounted on the vehicle 100.

When the basic battery 12 or the rapid change battery 20 is required to be dismounted, the jacking mechanism slightly jacks up the basic battery 12 or the rapid change battery 20, and at this point, a motor moves the bolt 73 downwards relative to the housing 72 to form an unlocked state (as shown in Fig. 6). Here, when the jacking mechanism slightly jacks up the basic battery 12 or the rapid change battery 20, the limiting ball 75 is released from a force applied state, such that the bolt 73 can be driven by the motor to move downwards, and the support rod 74 also releases the upward jacking force of the bolt 73 to move downwards until the limiting ball 75 moves out of the recess 711. At this point, the basic battery 12 or the rapid change battery 20 falls on the jacking mechanism, and the process of dismounting the basic battery 12 or the rapid change battery 20 is completed.

The rapid change device 70 in the present embodiment can simply and quickly realize locking and unlocking, and thus improves mounting and dismounting efficiencies of the battery.

It should be noted that the above description is only one implementation of the rapid change device 70 in the present invention. Certainly, the rapid change device 70 may have other implementations, and the present invention is not limited thereto.

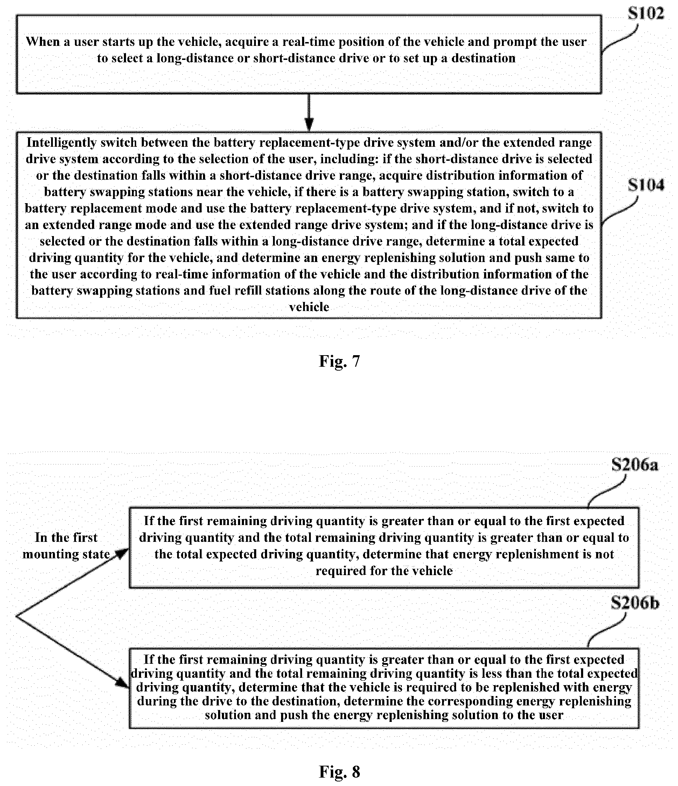

Fig. 7 shows a schematic flow diagram of an energy replenishing method for a battery replacement-type hybrid vehicle according to an embodiment of the present invention. The energy replenishing method can be applied to the battery replacement-type hybrid vehicle 100 according to any one or any combination of the above embodiments. Referring to Fig. 1, the energy replenishing method may at least include the following steps S102 to S104.

Step S102: when a user starts up the vehicle, acquiring a real-time position of the vehicle and prompting the user to select a long-distance or short-distance drive or to set up a destination.

In this step, the real-time position of the vehicle can be obtained by a positioning system (such as a GPS, a Beidou satellite positioning system, or the like). The user can be prompted to select the long-distance or short-distance drive or set the destination by means of voice, or the like, the selection or setting of the user can be obtained according to the triggering of a corresponding button by the user, and the prompt and acquisition can also be realized by interaction between a vehicle-mounted information entertainment system (in-vehicle infotainment system for short) and the user. Certainly, the real-time position of the vehicle may also be obtained and the user may also be prompted to select the long-distance or short-distance drive or set the destination in other manners, which is not limited in the present invention.

Step S104: intelligently switching between the battery replacement-type drive system and/or the extended range drive system according to the selection of the user. Specifically, the intelligently switching between the battery replacement-type drive system and/or the extended range drive system according to the selection of the user includes: if the short-distance drive is selected or the destination falls within a short-distance drive range, acquiring distribution information of battery swapping stations near the vehicle, if there is a battery swapping station, switching to a battery replacement mode and using the battery replacement-type drive system, and if not, switching to an extended range mode and using the extended range drive system; and if the long-distance drive is selected or the destination falls within a long-distance drive range, determining a total expected driving quantity for the vehicle, and determining an energy replenishing solution and pushing same to the user according to real-time information of the vehicle and the distribution information of the battery swapping stations and fuel refill stations along the route of the long-distance drive of the vehicle. The fuel refill station referred to herein may be, for example, a filling station, or the like.

In this step, the short-distance drive and the long-distance drive can be distinguished according to a preset distance threshold; for example, the preset distance threshold is 200km, and if a predicted drive distance exceeds the preset distance threshold, the long-distance drive is considered, and otherwise, the short-distance drive is considered. Whether the destination falls within the short-distance drive range or the long-distance drive range may be determined according to the relationship between the distance between the destination and the current vehicle real-time position and a preset distance threshold. If the distance between the destination and the current vehicle real-time position exceeds the preset distance threshold, it is determined that the destination falls within the long-distance drive range, and otherwise, it is determined that the destination falls within the short-distance drive range. The preset distance threshold may be set according to a vehicle performance and actual requirements, which is not limited in the present invention.

In this step, the destination of the vehicle, the distribution information of the battery swapping stations near the vehicle, and the distribution information of the battery swapping stations and the fuel refill stations along the route of the long-distance drive of the vehicle can be obtained through an off-line map or an on-line map loaded on the vehicle and navigation information of the vehicle. The on-line map and navigation information may be obtained through the Internet of vehicle technology. The total expected driving quantity refers to an expected total driving quantity of the vehicle, and may be expressed in mileage or time. When expressed in mileage, the total expected driving quantity may also be referred to as a total expected drive mileage. When expressed in time, the total expected driving quantity may also be referred to as total expected drive duration. The total expected driving quantity of the vehicle may be determined according to the current vehicle real-time position, the destination and the distribution of the battery swapping stations and the fuel refill stations around the destination.

The energy replenishing method for a battery replacement-type hybrid vehicle according to the embodiment of the present invention is applied to the battery replacement-type hybrid vehicle adopting the rapid change battery in conjunction with the range extender, can intelligently switch between the battery replacement-type drive system and/or the extended range drive system according to vehicle information and the distribution of nearby battery swapping stations and fuel refill stations, and determine the corresponding energy replenishing solution, so that the vehicle can drive to the destination normally, and replenish energy normally, thus ensuring the normal use of the vehicle.

In one embodiment of the present invention, the real-time information of the vehicle may include a battery mounting state and a total remaining driving quantity. The total remaining driving quantity refers to a total driving quantity supportable by the remaining energy of the vehicle. The total remaining driving quantity may also be expressed in mileage or time, and correspondingly, may also be referred to as a total remaining drive mileage or total remaining drive duration. The total remaining driving quantity may be obtained by an instrument of the vehicle, or calculated according to the remaining energy amount and the current driving parameters of the vehicle through an existing algorithm, which should be known by those skilled in the art and will not be repeated.

In this case, the energy replenishing solution may include energy replenishing solutions of a plurality of price intervals determined from low to high according to the distribution of the battery swapping stations and the fuel refill stations, a real-time fuel price and a real-time electricity price, which are provided for the user to select. Thus, on the premise of ensuring the normal drive of the vehicle, the most economical energy replenishing solution is provided, and the use experience of the user is improved.

In one embodiment of the present invention, the energy replenishing method may further include a long-distance battery operation mode. **In** this case, the step of determining an energy replenishing solution and pushing same to the user according to real-time information of the vehicle and the distribution information of the battery swapping stations and fuel refill stations along the route of the long-distance drive of the vehicle may be further implemented as: if there are few or none of the battery swapping stations in the recommended energy replenishing solution for the long-distance drive, recommending the long-distance battery operation mode to the user, prompting the user to remove the rapid change battery in a nearest battery swapping station, and driving at a high speed after a weight reduction.

In the embodiment, under the condition that the rapid change battery is difficult to replace or cannot be replaced because the number of the battery swapping stations is small or even zero, the weight of the whole vehicle can be effectively reduced by removing the rapid change battery of the vehicle, thereby reducing the energy consumption of the range extender, and improving an energy utilization rate.

In another embodiment of the present invention, the energy replenishing method may further include a short-distance battery operation mode. **In** this case, the step of determining an energy replenishing solution and pushing same to the user according to real-time information of the vehicle and the distribution information of the battery swapping stations and fuel refill stations along the route of the long-distance drive of the vehicle may be further implemented as: if the number of the battery swapping stations is large or a daily drive mileage is short in the recommended energy replenishing solution for the short-distance drive, recommending the short-distance battery operation mode to the user, prompting the user to remove a high-capacity rapid change battery in a nearest battery swapping station and mounting a low-capacity rapid change battery matched with the daily drive mileage.

In the embodiment, by adopting a small-capacity rapid change battery in the short-distance battery operation mode, the no-load weight of the vehicle can be reduced, and the energy utilization rate can be improved.

In one embodiment of the present invention, the total expected driving quantity may include a first expected driving quantity by which the vehicle reaches the destination from the current position and a second expected driving quantity by which the vehicle reaches a target energy replenishing station (i.e., a target battery swapping station or a target fuel refill station) around the destination from the destination. The target energy replenishing station mentioned here may be designated by the user or selected and recommended from all energy replenishing stations around the destination according to a preset screening rule. The preset screening rule may include: selecting an energy replenishing station closest to the destination from all the energy replenishing stations around the destination as the target energy replenishing station; or according to historical use data of the user, selecting an energy replenishing station with the highest historical use time number of the user from all the energy replenishing stations around the destination as the target energy replenishing station; or, combining the above two modes, and selecting the target energy replenishing station by comprehensively considering the distance from the destination and the influence of the historical use time number of the user using a weighting method. Certainly, there may be other types of preset screening rules, which is not limited in the present invention.

The first expected driving quantity, the second expected driving quantity and the total expected driving quantity are correspondingly expressed in mileage or time. When expressed in mileage, the first expected driving quantity and the second expected driving quantity are referred to as a first expected drive mileage and a second expected drive mileage respectively. When expressed in time, the first expected driving quantity and the second expected driving quantity are referred to as first expected drive duration and second expected drive duration respectively.

The battery mounting state of the vehicle may include a first mounting state indicating that the rapid change battery is mounted on the vehicle. In the first mounting state, the total remaining driving quantity of the vehicle is the sum of a first remaining driving quantity of the rapid change battery and a second remaining driving quantity of the range extender. The first remaining driving quantity refers to a driving quantity supportable by the remaining capacity of the rapid change battery. In the case where the extended range drive system of the battery replacement-type hybrid vehicle does not include the basic battery, the second remaining driving quantity refers to a driving quantity supportable by the range extender with the remaining fuel in the extended range drive system. In the case where the extended range drive system of the battery replacement-type hybrid vehicle includes the basic battery, the second remaining driving quantity refers to the sum of the driving quantity supportable by the range extender with the remaining fuel in the extended range drive system and a driving quantity supportable by the amount of electricity stored in the basic battery. The first remaining driving quantity, the second remaining driving quantity and the total remaining driving quantity are correspondingly expressed in mileage or time. When expressed in mileage, the first remaining driving quantity and the second remaining driving quantity are referred to as a first remaining drive mileage and a second remaining drive mileage respectively. When expressed in time, the first remaining driving quantity and the second remaining driving quantity are referred to as first remaining drive duration and second remaining drive duration respectively.

In this case, referring to Fig. 8, the step of determining an energy replenishing solution according to real-time information of the vehicle and the distribution information of the battery swapping stations and fuel refill stations along the route of the long-distance drive of the vehicle may include:
step S206a: in the first mounting state, if the first remaining driving quantity is greater than or equal to the first expected driving quantity and the total remaining driving quantity is greater than or equal to the total expected driving quantity (i.e., the sum of the first expected driving quantity and the second expected driving quantity), determining that energy replenishment is not required for the vehicle.

Step S206b: in the first mounting state, if the first remaining driving quantity is greater than or equal to the first expected driving quantity and the total remaining driving quantity is less than the total expected driving quantity, determining that the vehicle is required to be replenished with energy during the drive to the destination, determining the corresponding energy replenishing solution and pushing the energy replenishing solution to the user.

**In** the present invention, the energy replenishing station may include a battery swapping station and/or a fuel refill station (e.g., a filling station). Correspondingly, a mode of replenishing energy to the vehicle may include replacing or removing the rapid change battery at the battery swapping station, and/or adding fuel (e.g., gasoline, hydrogen, methanol, etc.) required by the range extender at the filling station.

In the embodiment of the present invention, when the energy replenishing solution is determined, under the condition that the first remaining driving quantity of the vehicle is greater than or equal to the first expected driving quantity (that is, the residual capacity of a power battery is enough to support the vehicle to reach the destination), whether the total remaining driving quantity of the vehicle can satisfy the sum of the first expected driving quantity of the vehicle from the current position to the destination and the second expected driving quantity of the vehicle from the destination to the target energy replenishing station around the destination is considered; that is, whether the remaining energy of the vehicle after reaching the destination is enough for the vehicle to reach the target energy replenishing station is considered, such that the vehicle is ensured to have enough energy to go to the energy replenishing station for energy replenishment after reaching the destination, and the problem of insufficient energy after the vehicle reaches the destination is avoided.

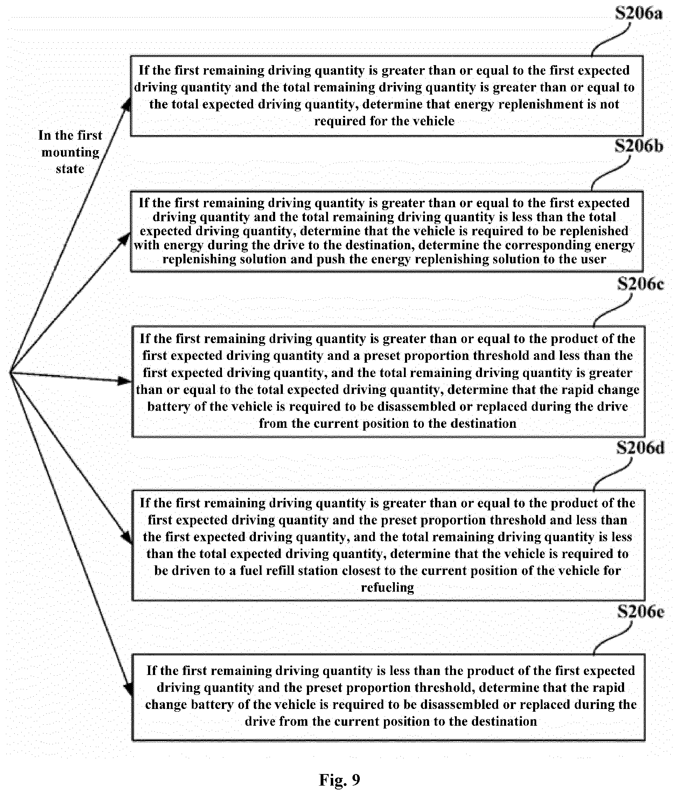

Further, in one embodiment, referring to Fig. 9, in the first mounting state, the step of determining an energy replenishing solution according to real-time information of the vehicle and the distribution information of the battery swapping stations and fuel refill stations along the route of the long-distance drive of the vehicle may further include:
step S206c: in the first mounting state, if the first remaining driving quantity is greater than or equal to the product of the first expected driving quantity and a preset proportion threshold and less than the first expected driving quantity, and the total remaining driving quantity is greater than or equal to the total expected driving quantity, determining that the rapid change battery of the vehicle is required to be disassembled or replaced during the drive from the current position to the destination.

Step S206d: in the first mounting state, if the first remaining driving quantity is greater than or equal to the product of the first expected driving quantity and the preset proportion threshold and less than the first expected driving quantity, and the total remaining driving quantity is less than the total expected driving quantity, determining that the vehicle is required to be driven to a fuel refill station closest to the current position of the vehicle for refueling.

Step S206e: in the first mounting state, if the first remaining driving quantity is less than the product of the first expected driving quantity and the preset proportion threshold, determining that the rapid change battery of the vehicle is required to be disassembled or replaced during the drive from the current position to the destination.

In this embodiment, the preset proportion threshold is a value less than 1, and may be set according to actual application requirements. For example, the capacity requirement of the rapid change battery can be set according to the use performance of the vehicle, or according to the battery use habit of the user (such as historical statistical data of the proportion value of the remaining capacity of the rapid change battery when the user performs energy replenishment). In a specific implementation, the preset proportion threshold may be set to 2/3, for example.

The present embodiment further provides a corresponding energy replenishing solution for the endurance ability of different range extenders when the first remaining driving quantity of the rapid change battery is less than the first expected driving quantity (that is, the remaining capacity of the rapid change battery is not enough for the vehicle to reach the destination), so as to further guarantee the normal use of the vehicle.

Still further, in one embodiment, the real-time information of the vehicle may also include road condition information between the current position of the vehicle and the destination. The road condition information can be acquired from the cloud in real time using the Internet of vehicle technology. Therefore, before the rapid change battery of the vehicle is determined to be required to be disassembled or replaced during the drive from the current position to the destination, a congested road section between the current position of the vehicle and the destination can be determined according to the acquired road condition information.

In this case, the step of determining that the rapid change battery of the vehicle is required to be disassembled or replaced during the drive from the current position to the destination may be further implemented as: determining that the rapid change battery of the vehicle is required to be disassembled or replaced before the vehicle reaches the congested road section. That is, step S206c may be further implemented as: in the first mounting state, if the first remaining driving quantity is greater than or equal to the product of the first expected driving quantity and the preset proportion threshold and less than the first expected driving quantity, and the total remaining driving quantity is greater than or equal to the total expected driving quantity, determining that the rapid change battery of the vehicle is required to be disassembled or replaced before the vehicle reaches the congested road section. Step S206e may be further implemented as: in the first mounting state, if the first remaining driving quantity is less than the product of the first expected driving quantity and the preset proportion threshold, determining that the rapid change battery of the vehicle is required to be disassembled or replaced before the vehicle reaches the congested road section. The rapid change battery is disassembled before congestion, such that the weight of the whole vehicle can be reduced, and the energy loss of the vehicle on the congested road section is reduced. Or, enough energy can be ensured to be provided for vehicle operation by replacing the rapid change battery before congestion.

In one embodiment, the real-time information of the vehicle may include the battery mounting state of the vehicle, the total remaining driving quantity, and the road condition information between the current position of the vehicle and the destination, and the battery mounting state may include a second mounting state indicating that the rapid change battery is disassembled from the vehicle. In the second mounting state, since the rapid change battery is detached from the vehicle (that is, is not on the vehicle), the total remaining driving quantity of the vehicle at this point is equal to the second remaining driving quantity of the range extender.

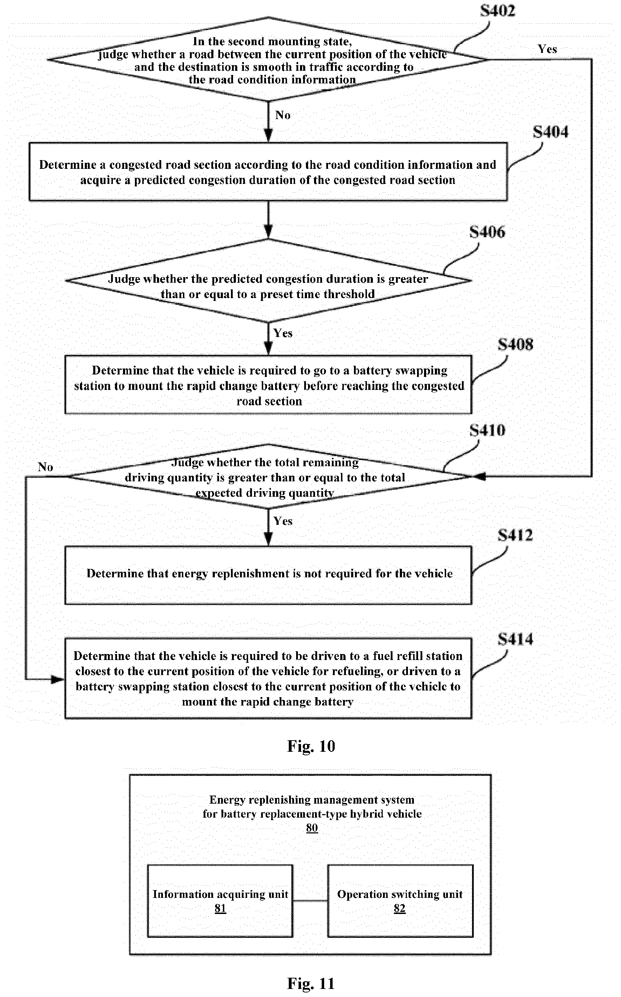

In this case, referring to Fig. 10, the step of determining an energy replenishing solution according to real-time information of the vehicle and the distribution information of the battery swapping stations and fuel refill stations along the route of the long-distance drive of the vehicle may include:
step S402: in the second mounting state, judging whether a road between the current position of the vehicle and the destination is smooth in traffic according to the road condition information. If no, step S404 is executed. If yes, step S410 is executed.

Step S404: determining a congested road section according to the road condition information and acquiring a predicted congestion duration of the congested road section. Step S406 is continuously executed.

In the present embodiment, the predicted congestion duration may be determined according to a predicted transit time of the congested road section provided in the navigation information.

Step S406: judging whether the predicted congestion duration is greater than or equal to a preset time threshold. If yes, step S408 is executed.

The preset time threshold can be set according to actual application requirements. For example, the preset time threshold may be set as a maximum time required for the vehicle to go to the battery swapping station for mounting or replacement of the rapid change battery.

Step S408: determining that the vehicle is required to go to a battery swapping station to mount the rapid change battery before reaching the congested road section.

When the congestion duration is greater than or equal to the preset time threshold, the vehicle is driven to the battery swapping station for battery replacement before reaching the congested road section, such that a time utilization rate can be improved, the congested road section and the congestion time can be avoided to a certain extent, and the method is particularly suitable for urban driving scenes.

Step S410: judging whether the total remaining driving quantity is greater than or equal to the total expected driving quantity. If yes, step S412 is executed. If no, step S414 is executed.

Step S412: determining that energy replenishment is not required for the vehicle.

Step S414: determining that the vehicle is required to be driven to a fuel refill station closest to the current position of the vehicle for refueling, or driven to a battery swapping station closest to the current position of the vehicle to mount the rapid change battery.

In the present embodiment, under the mounting state where the rapid change battery is detached, a more precise and reasonable energy replenishing solution may be provided by combining expected driving quantities, remaining driving quantities and road condition information, thereby further ensuring the normal use of the vehicle.

In some embodiments, when it is determined that energy replenishment of the vehicle is not required, a prompt may not be pushed to the user, thereby saving time, avoiding bothering the user, and improving the user experience.

As mentioned above, the total remaining driving quantity may be obtained by an instrument of the vehicle, or calculated according to the remaining energy amount of the vehicle and the current driving parameters through an existing algorithm. However, these methods do not consider possible influences of usage habits of different users. For example, the number of air-conditioner use times, the number of braking times, or the like, of different users all affect the remaining driving quantity of the vehicle. To this end, in one embodiment, the total remaining driving quantity of the vehicle may be acquired by:
first, acquiring a remaining energy amount and current driving parameters of the vehicle, and calculating an original total remaining driving quantity according to the remaining energy amount and the current driving parameters. The driving parameters may include an average speed of the vehicle, a vehicle load, a vehicle age, or the like.

The calculation of the original total remaining driving quantity should be well known to those skilled in the art and will not be described in detail.

Then, user habit parameters of the vehicle are acquired, and the original total remaining driving quantity is corrected according to the user habit parameters to obtain the total remaining driving quantity.

The user habit parameters can include an air-conditioner using time, the number of braking times, the number of gear shifting times, the weight of the user, or the like. The correction may be performed by a machine learning model. For example, the machine learning model is trained with the historical habit parameters of the user and the historical data of corresponding original total remaining driving quantity of the vehicle as input and corresponding actual total remaining driving quantity data as output, and the user habit parameters and the current original total remaining driving quantity are input into the trained machine learning model during correction to obtain the corrected total remaining driving quantity.

The first remaining driving quantity and the second remaining driving quantity may be corrected by a method similar to that of the total remaining driving quantity, which is not repeated herein.

In the present embodiment, the remaining driving quantity of the vehicle may be corrected according to the habits of the user, thereby providing a more personalized and safer energy replenishing solution for the user.

In another embodiment, in step S104, before the total expected driving quantity of the vehicle is determined, the destination and an expected drive path of the vehicle may be determined according to historical driving data of the vehicle, and a current time and/or the current position of the vehicle. Further, the step of determining the total expected driving quantity of the vehicle may be further implemented as: determining the total expected driving quantity of the vehicle according to the current position of the vehicle, the determined destination and expected drive path, and the distribution of the energy replenishing stations (i.e., the battery swapping stations and the fuel refill stations) around the destination. The historical driving data of the vehicle may include a historical drive track and drive time of the vehicle, or the like.

The first and second expected drive quantities are determined in a manner similar to that of the total expected driving quantity, which is not repeated herein.

In the present embodiment, the influence of the historical driving data of the vehicle is taken into consideration when the expected driving quantity of the vehicle is determined. Since the historical driving data reflects the use habits of a user, the energy replenishing solution determined based on the expected driving quantity determined in this way is more personalized and safer.

Based on the same inventive concept, an embodiment of the present invention further provides an energy replenishing management system for a battery replacement-type hybrid vehicle. The energy replenishing management system according to the embodiment of the present invention can be applied to the battery replacement-type hybrid vehicle 100 according to any one or any combination of the foregoing embodiments.

Fig. 11 shows a schematic structural diagram of an energy replenishing management system 80 for a battery replacement-type hybrid vehicle according to an embodiment of the present invention. Referring to Fig. 11, the energy replenishing management system 80 may at least include an information acquiring unit 81 and an operation switching unit 82.

The functions of the components or devices of the energy replenishing management system 80 for a battery replacement-type hybrid vehicle according to the embodiment of the present invention and the connection relationship between the components will now be described.

The information acquiring unit 81 is configured to, when a user starts up the vehicle, acquire a real-time position of the vehicle and prompt the user to select a long-distance or short-distance drive or to set up a destination.

The operation switching unit 82 may be connected with the information acquiring unit 81, and configured to, according to selection of the user, intelligently switch between the battery replacement-type drive system and/or the extended range drive system. Specifically, the operation switching unit 82 is further configured to: if the short-distance drive is selected or the destination falls within a short-distance drive range, trigger the information acquiring unit 81 to acquire distribution information of battery swapping stations near the vehicle, if there is a battery swapping station, switch to a battery replacement mode and use the battery replacement-type drive system, and if not, switch to an extended range mode and use the extended range drive system; and if the long-distance drive is selected or the destination falls within a long-distance drive range, determine a total expected driving quantity for the vehicle, and determine an energy replenishing solution and push same to the user according to real-time information of the vehicle and the distribution information of the battery swapping stations and fuel refill stations along the route of the long-distance drive of the vehicle.

In one embodiment of the present invention, the real-time information of the vehicle includes a battery mounting state and a total remaining driving quantity. The energy replenishing solution includes energy replenishing solutions of a plurality of price intervals determined from low to high according to the distribution of the battery swapping stations and the fuel refill stations, a real-time fuel price and a real-time electricity price, which are provided for the user to select.

In one embodiment of the present invention, the operation switching unit 82 is further configured to: if there are few or none of the battery swapping stations in the recommended energy replenishing solution for the long-distance drive, recommend the long-distance battery operation mode to the user, prompt the user to remove the rapid change battery in a nearest battery swapping station, and drive at a high speed after a weight reduction.

In another embodiment of the present invention, the operation switching unit 82 is further configured to: if the number of the battery swapping stations is large or a daily drive mileage is short in the recommended energy replenishing solution for the short-distance drive, recommend the short-distance battery operation mode to the user, prompt the user to remove a high-capacity rapid change battery in a nearest battery swapping station and mount a low-capacity rapid change battery matched with the daily drive mileage.

In one embodiment of the present invention, the total expected driving quantity includes a first expected driving quantity by which the vehicle reaches the destination from the current position and a second expected driving quantity by which the vehicle reaches a target battery swapping station or a target fuel refill station around the destination from the destination. The battery mounting state of the vehicle includes a first mounting state indicating that the rapid change battery is mounted on the vehicle. In the first mounting state, the total remaining driving quantity is the sum of a first remaining driving quantity of the rapid change battery and a second remaining driving quantity of the range extender.

Correspondingly, the operation switching unit 82 may be further configured to: in the first mounting state, if the first remaining driving quantity is greater than or equal to the first expected driving quantity and the total remaining driving quantity is greater than or equal to the total expected driving quantity, determine that energy replenishment is not required for the vehicle; and if the first remaining driving quantity is greater than or equal to the first expected driving quantity and the total remaining driving quantity is less than the total expected driving quantity, determine that the vehicle is required to be replenished with energy during the drive to the destination, determine the corresponding energy replenishing solution and push the energy replenishing solution to the user.

In one embodiment of the present invention, the operation switching unit 82 may be further configured to: in the first mounting state, if the first remaining driving quantity is greater than or equal to the product of the first expected driving quantity and a preset proportion threshold and less than the first expected driving quantity, and the total remaining driving quantity is greater than or equal to the total expected driving quantity, determine that the rapid change battery of the vehicle is required to be disassembled or replaced during the drive from the current position to the destination; if the first remaining driving quantity is greater than or equal to the product of the first expected driving quantity and the preset proportion threshold and less than the first expected driving quantity, and the total remaining driving quantity is less than the total expected driving quantity, determine that the vehicle is required to be driven to a fuel refill station closest to the current position of the vehicle for refueling; and if the first remaining driving quantity is less than the product of the first expected driving quantity and the preset proportion threshold, determine that the rapid change battery of the vehicle is required to be disassembled or replaced during the drive from the current position to the destination.

Still further, in one embodiment of the present invention, the real-time information of the vehicle may also include road condition information between the current position of the vehicle and the destination.

Correspondingly, the operation switching unit 82 may be further configured to: in the first mounting state, if the first remaining driving quantity is greater than or equal to the product of the first expected driving quantity and the preset proportion threshold and less than the first expected driving quantity, and the total remaining driving quantity is greater than or equal to the total expected driving quantity, determine a congested road section according to the road condition information, and determine that the rapid change battery of the vehicle is required to be disassembled or replaced before the vehicle reaches the congested road section; if the first remaining driving quantity is greater than or equal to the product of the first expected driving quantity and the preset proportion threshold and less than the first expected driving quantity, and the total remaining driving quantity is less than the total expected driving quantity, determine that the vehicle is required to be driven to a fuel refill station closest to the current position of the vehicle for refueling; and if the first remaining driving quantity is less than the product of the first expected driving quantity and the preset proportion threshold, determine a congested road section according to the road condition information, and determine that the rapid change battery of the vehicle is required to be disassembled or replaced before the vehicle reaches the congested road section.

In one embodiment, the battery mounting state may further include a second mounting state indicating that the rapid change battery is disassembled from the vehicle. The real-time information may also include road condition information between the current position of the vehicle and the destination. Correspondingly, the operation switching unit 82 may be further configured to:
in the second mounting state, judge whether a road between the current position of the vehicle and the destination is smooth in traffic according to the road condition information;
if the road between the current position of the vehicle and the destination is not smooth in traffic, determine a congested road section according to the road condition information and acquire a predicted congestion duration of the congested road section;
judge whether the predicted congestion duration is greater than or equal to a preset time threshold, and if yes, determine that the vehicle is required to go to a battery swapping station to mount the rapid change battery before reaching the congested road section;
if the road between the current position of the vehicle and the destination is smooth in traffic, judge whether the total remaining driving quantity is greater than or equal to the total expected driving quantity;
if the total remaining driving quantity is greater than or equal to the total expected driving quantity, determine that energy replenishment is not required for the vehicle; and
if the total remaining driving quantity is less than the total expected driving quantity, determine that the vehicle is required to be driven to a fuel refill station closest to the current position of the vehicle for refueling, or driven to a battery swapping station closest to the current position of the vehicle to mount the rapid change battery.

In one embodiment of the present invention, the operation switching unit 82 may be further configured to:
acquire a remaining energy amount and current driving parameters of the vehicle, and calculate an original total remaining driving quantity according to the remaining energy amount and the current driving parameters; and
acquire user habit parameters of the vehicle, and correct the original total remaining driving quantity according to the user habit parameters to obtain the total remaining driving quantity.

In one embodiment of the present invention, the operation switching unit 82 may be further configured to:
determine the destination and an expected drive path of the vehicle according to historical driving data of the vehicle and a current time and/or the current position of the vehicle; and
determine the total expected driving quantity of the vehicle according to the current position of the vehicle, the destination, the expected drive path and the distribution of the energy replenishing stations around the destination.

According to any one or a combination of plural optional embodiments, the embodiments of the present invention can achieve the following beneficial effects.

The energy replenishing method and management system for a battery replacement-type hybrid vehicle according to the embodiments of the present invention are applied to the battery replacement-type hybrid vehicle adopting the rapid change battery in conjunction with the range extender, can intelligently switch between the battery replacement-type drive system and/or the extended range drive system according to vehicle information and the distribution of nearby battery swapping stations and fuel refill stations, and determine the corresponding energy replenishing solution, so that the vehicle can drive to the destination normally, and replenish energy normally, thus ensuring the normal use of the vehicle.

Further, for the energy replenishing method and management system according to the embodiments of the present invention, when the energy replenishing solution is determined, under the condition that the residual capacity of the rapid change battery is enough to support the vehicle to reach the destination, whether the total remaining driving quantity of the vehicle can satisfy the sum of the first expected driving quantity of the vehicle from the current position to the destination and the second expected driving quantity of the vehicle from the destination to the target energy replenishing station (target battery swapping station or target fuel refill station) around the destination is considered; that is, whether the remaining energy of the vehicle after reaching the destination is enough for the vehicle to reach the target energy replenishing station is considered, such that the vehicle is ensured to have enough energy to go to the energy replenishing station for energy replenishment after reaching the destination, and the problem of insufficient energy after the vehicle reaches the destination is avoided.

Further, for the energy replenishing method and management system according to the embodiments of the present invention, when the energy replenishing solution is determined, a more precise and reasonable energy replenishing solution may be provided by combining different battery mounting states, expected driving quantities, remaining driving quantities and road condition information of the vehicle, thereby further ensuring the normal use of the vehicle.

Further, for the energy replenishing method and management system according to the embodiments of the present invention, when the energy replenishing solution is determined, the remaining driving quantity of the vehicle may be corrected and/or the expected driving quantity may be determined according to habits of the user, thereby providing a more personalized and safer energy replenishing solution for the user.

In the description provided herein, numerous specific details are set forth. However, it can be understood that the embodiments of the present invention may be practiced without these specific details. In some instances, well-known methods, structures and technology are not shown in detail, in order not to obscure an understanding of this description.

## Claims

1. An energy replenishing method for a battery replacement-type hybrid vehicle, wherein the vehicle is provided with a battery replacement-type drive system and an extended range drive system that can be rapidly switched and used separately as a main power system;
the extended range drive system comprises a range extender and a drive motor;
the battery replacement-type drive system comprises a rapid change battery and the drive motor, and the rapid change battery can be rapidly removed and replaced at a battery swapping station; and
the method comprises:
(S102), when a user starts up the vehicle, acquiring, by an information acquiring unit, a real-time position of the vehicle and prompting, by the information acquiring unit, the user to select a long-distance or short-distance drive or to set up a destination; and (S104), intelligently switching, by an operation switching unit, between the battery replacement-type drive system and/or the extended range drive system according to selection of the user; wherein
the (S104), intelligently switching, by the operation switching unit, between the battery replacement-type drive system and/or the extended range drive system according to selection of the user comprises:
if the short-distance drive is selected or the destination falls within a short-distance drive range, acquiring, by the information acquiring unit, distribution information of battery swapping stations near the vehicle, if there is a battery swapping station, switching, by the operation switching unit, to a battery replacement mode and using the battery replacement-type drive system, and if not, switching, by the operation switching unit, to an extended range mode and using the extended range drive system; and
if the long-distance drive is selected or the destination falls within a long-distance drive range, determining, by the operation switching unit, a total expected driving quantity for the vehicle, and determining, by the operation switching unit, an energy replenishing solution and pushing, by the operation switching unit, same to the user according to real-time information of the vehicle and the distribution information of the battery swapping stations and fuel refill stations along the route of the long-distance drive of the vehicle,
the real-time information of the vehicle comprises a battery mounting state and a total remaining driving quantity;
the energy replenishing solution comprises energy replenishing solutions of a plurality of price intervals determined from low to high according to the distribution of the battery swapping stations and the fuel refill stations, a real-time fuel price and a real-time electricity price, which are provided for the user to select,
the total expected driving quantity comprises a first expected driving quantity by which the vehicle reaches the destination from the current position and a second expected driving quantity by which the vehicle reaches a target battery swapping station or a target fuel refill station around the destination from the destination;
the battery mounting state of the vehicle comprises a first mounting state indicating that the rapid change battery is mounted on the vehicle;
in the first mounting state, the total remaining driving quantity is the sum of a first remaining driving quantity of the rapid change battery and a second remaining driving quantity of the range extender; and
determining, by the operation switching unit, the energy replenishing solution according to real-time information of the vehicle and the distribution information of the battery swapping stations and fuel refill stations along the route of the long-distance drive of the vehicle comprises:
(S206a), in the first mounting state, if the first remaining driving quantity is greater than or equal to the first expected driving quantity and the total remaining driving quantity is greater than or equal to the total expected driving quantity, determining, by the operation switching unit, that energy replenishment is not required for the vehicle; and
(S206b), if the first remaining driving quantity is greater than or equal to the first expected driving quantity and the total remaining driving quantity is less than the total expected driving quantity, determining, by the operation switching unit, that the vehicle is required to be replenished with energy during the drive to the destination, determining, by the operation switching unit, the corresponding energy replenishing solution and pushing, by the operation switching unit, the energy replenishing solution to the user.

2. The energy replenishing method according to claim 1 or 1, wherein
the method further comprises a long-distance battery operation mode;
the determining an energy replenishing solution and pushing same to the user according to real-time information of the vehicle and the distribution information of the battery swapping stations and fuel refill stations along the route of the long-distance drive of the vehicle comprises:
if there are few or none of the battery swapping stations in the recommended energy replenishing solution for the long-distance drive, recommending the long-distance battery operation mode to the user, prompting the user to remove the rapid change battery in a nearest battery swapping station, and driving at a high speed after a weight reduction.

3. The energy replenishing method according to any one of claims 1 to 2, wherein
the method further comprises a short-distance battery operation mode;
the determining an energy replenishing solution and pushing same to the user according to real-time information of the vehicle and the distribution information of the battery swapping stations and fuel refill stations along the route of the long-distance drive of the vehicle comprises:
if the number of the battery swapping stations is large or a daily drive mileage is short in the recommended energy replenishing solution for the short-distance drive, recommending the short-distance battery operation mode to the user, prompting the user to remove a rapid change battery with a high capacity in a nearest battery swapping station and mounting a rapid change battery with a low capacity matched with the daily drive mileage.

4. The energy replenishing method according to claim 1, wherein the first expected driving quantity, the second expected driving quantity, the first remaining driving quantity, and the second remaining driving quantity are expressed in mileage or time.

5. The energy replenishing method according to claim 1 or 4, wherein determining the energy replenishing solution according to real-time information of the vehicle and the distribution information of the battery swapping stations and fuel refill stations along the route of the long-distance drive of the vehicle further comprises:
(S206c), in the first mounting state, if the first remaining driving quantity is greater than or equal to the product of the first expected driving quantity and a preset proportion threshold and less than the first expected driving quantity, and the total remaining driving quantity is greater than or equal to the total expected driving quantity, determining that the rapid change battery of the vehicle is required to be disassembled or replaced during the drive from the current position to the destination;
(S206d), if the first remaining driving quantity is greater than or equal to the product of the first expected driving quantity and the preset proportion threshold and less than the first expected driving quantity, and the total remaining driving quantity is less than the total expected driving quantity, determining that the vehicle is required to be driven to a fuel refill station closest to the current position of the vehicle for refueling; and
(S206e), if the first remaining driving quantity is less than the product of the first expected driving quantity and the preset proportion threshold, determining that the rapid change battery of the vehicle is required to be disassembled or replaced during the drive from the current position to the destination.

6. The energy replenishing method according to claim 5, wherein
the real-time information of the vehicle also comprises road condition information between the current position of the vehicle and the destination;
before determining that the rapid change battery of the vehicle is required to be disassembled or replaced during the drive, the method further comprises:
determining a congested road section according to the road condition information; and
the determining that the rapid change battery of the vehicle is required to be disassembled or replaced during the drive comprises:
determining that the rapid change battery of the vehicle is required to be disassembled or replaced before the vehicle reaches the congested road section.

7. The energy replenishing method according to any one of claims 1 to 6, wherein the battery mounting state further comprises a second mounting state indicating that the rapid change battery is disassembled from the vehicle;
the real-time information of the vehicle also comprises road condition information between the current position of the vehicle and the destination; and
determining the energy replenishing solution according to real-time information of the vehicle and the distribution information of the battery swapping stations and fuel refill stations along the route of the long-distance drive of the vehicle further comprises:
(S402), in the second mounting state, judging whether a road between the current position of the vehicle and the destination is smooth in traffic according to the road condition information;
(S404), if the road between the current position of the vehicle and the destination is not smooth in traffic, determining a congested road section according to the road condition information and acquiring a predicted congestion duration of the congested road section;
(S406), judging whether the predicted congestion duration is greater than or equal to a preset time threshold, and if yes, (S408), determining that the vehicle is required to go to a battery swapping station to mount the rapid change battery before reaching the congested road section;
(S410), if the road between the current position of the vehicle and the destination is smooth in traffic, judging whether the total remaining driving quantity is greater than or equal to the total expected driving quantity;
(S412), if the total remaining driving quantity is greater than or equal to the total expected driving quantity, determining that energy replenishment is not required for the vehicle; and
(S414), if the total remaining driving quantity is less than the total expected driving quantity, determining that the vehicle is required to be driven to a fuel refill station closest to the current position of the vehicle for refueling, or driven to a battery swapping station closest to the current position of the vehicle to mount the rapid change battery.

8. The energy replenishing method according to any one of claims 1 to 7, wherein the total remaining driving quantity of the vehicle is obtained by:
acquiring a remaining energy amount and current driving parameters of the vehicle, and calculating an original total remaining driving quantity according to the remaining energy amount and the current driving parameters; and
acquiring user habit parameters of the vehicle, and correcting the original total remaining driving quantity according to the user habit parameters to obtain the total remaining driving quantity.

9. The energy replenishing method according to any one of claims 1 to 8, before determining the total expected driving quantity of the vehicle, further comprising:
determining the destination and an expected drive path of the vehicle according to historical driving data of the vehicle and a current time and/or the current position of the vehicle;
the determining the total expected driving quantity of the vehicle comprises:
determining the total expected driving quantity of the vehicle according to the current position of the vehicle, the destination, the expected drive path and the distribution of the battery swapping stations and the fuel refill stations around the destination.

10. An energy replenishing management system for a battery replacement-type hybrid vehicle (100), wherein the vehicle is provided with a battery replacement-type drive system and an extended range drive system that can be rapidly switched and used separately as a main power system;
the extended range drive system comprises a range extender (10) and a drive motor (31);
the battery replacement-type drive system comprises a rapid change battery (20) and the drive motor (31), and the rapid change battery can be rapidly removed and replaced at a battery swapping station; and
the energy replenishing management system comprises:
an information acquiring unit (81) configured to, when a user starts up the vehicle, acquire a real-time position of the vehicle and prompt the user to select a long-distance or short-distance drive or to set up a destination; and
an operation switching unit (82) configured to, according to the selection of the user, intelligently switch between the battery replacement-type drive system and/or the extended range drive system; wherein
the operation switching unit (82) is further configured to perform the method of claim 1; and is configured to:
if the short-distance drive is selected or the destination falls within a short-distance drive range, trigger the information acquiring unit to acquire distribution information of battery swapping stations near the vehicle, if there is a battery swapping station, switch to a battery replacement mode and use the battery replacement-type drive system, and if not, switch to an extended range mode and use the extended range drive system; and
if the long-distance drive is selected or the destination falls within a long-distance drive range, determine a total expected driving quantity for the vehicle, and determine an energy replenishing solution and push same to the user according to real-time information of the vehicle and the distribution information of the battery swapping stations and fuel refill stations along the route of the long-distance drive of the vehicle,
wherein the real-time information of the vehicle comprises a battery mounting state and a total remaining driving quantity;
the energy replenishing solution comprises energy replenishing solutions of a plurality of price intervals determined from low to high according to the distribution of the battery swapping stations and the fuel refill stations, a real-time fuel price and a real-time electricity price, which are provided for the user to select.

## Patentansprüche

1. Verfahren zum Auffüllen von Energie für ein Hybridfahrzeug vom Batterie-Ersatztyp, wobei das Fahrzeug mit einem Antriebssystem vom Batterie-Ersatztyp und einem Antriebssystem mit erweiterter Reichweite versehen ist, die schnell umgeschaltet und separat als Hauptantriebssystem verwendet werden können;
wobei das Antriebssystem mit erweiterter Reichweite einen Reichweitenverlängerer und einen Antriebsmotor umfasst;
wobei das Antriebssystem vom Batterie-Ersatztyp eine Schnellwechselbatterie und den Antriebsmotor umfasst, wobei die Schnellwechselbatterie an einer Batteriewechselstation schnell entnommen und ausgetauscht werden kann; und
wobei das Verfahren ferner umfasst:
(S102), wenn ein Benutzer das Fahrzeug startet, Erfassen einer Echtzeitposition des Fahrzeugs durch eine Informationserfassungseinheit und Auffordern des Benutzers durch die Informationserfassungseinheit, eine Langstrecken- oder Kurzstreckenfahrt auszuwählen oder ein Ziel festzulegen; und (S104), intelligentes Umschalten durch eine Betriebsumschalteinheit zwischen dem Antriebssystem vom Batterie-Ersatztyp und/oder dem Antriebssystem mit erweiterter Reichweite entsprechend der Auswahl des Benutzers; wobei
das (S104) intelligente Umschalten durch eine Betriebsumschalteinheit zwischen dem Antriebssystem vom Batterie-Ersatztyp und/oder dem Antriebssystem mit erweiterter Reichweite entsprechend der Auswahl des Benutzers umfasst:
wenn die Kurzstreckenfahrt ausgewählt ist oder das Ziel innerhalb einer Kurzstreckenfahr-Reichweite liegt, Erfassen von Verteilungsinformationen über Batteriewechselstationen in der Nähe des Fahrzeugs durch die Informationserfassungseinheit, wenn eine Batteriewechselstation vorhanden ist, Umschalten durch die Betriebsumschalteinheit in einen Batterieaustauschmodus und Verwenden des Antriebssystems vom Batterie-Ersatztyp, und wenn nicht, Umschalten durch die Betriebsumschalteinheit in einen Modus mit erweiterter Reichweite und Verwenden des Antriebssystems mit erweiterter Reichweite; und
wenn die Langstreckenfahrt ausgewählt ist oder das Ziel innerhalb einer Langstreckenfahrt-Reichweite liegt, Bestimmen einer erwarteten Gesamtfahrmenge für das Fahrzeug durch die Betriebsumschalteinheit, und Bestimmen einer Energieauffüllungslösung durch die Betriebsumschalteinheit und Anbieten derselben durch die Betriebsumschalteinheit an den Benutzer gemäß Echtzeitinformationen des Fahrzeugs und den Verteilungsinformationen der Batteriewechselstationen und Kraftstoffnachfüllstationen entlang der Route der Langstreckenfahrt des Fahrzeugs,
wobei die Echtzeitinformationen des Fahrzeugs einen Batterieeinbauzustand und eine verbleibende Gesamtfahrmenge umfassen;
wobei die Energieauffüllungslösung aus Energieauffüllungslösungen mit einer Vielzahl von Preisintervallen besteht, die gemäß der Verteilung der Batteriewechselstation und der Kraftstoffnachfüllstationen, einem Echtzeit-Kraftstoffpreis und einem Echtzeit-Strompreis von niedrig bis hoch bestimmt werden und dem Benutzer zur Auswahl angeboten werden,
wobei die erwartete Gesamtfahrmenge eine erste erwartete Fahrmenge umfasst, mit der das Fahrzeug von der aktuellen Position aus das Ziel erreicht, und eine zweite erwartete Fahrmenge, mit der das Fahrzeug vom Ziel aus eine Ziel-Batteriewechselstation oder eine Ziel-Kraftstoffnachfüllstation in der Nähe des Ziels erreicht;
wobei der Batterieeinbauzustand des Fahrzeugs einen ersten Einbauzustand umfasst, der anzeigt, dass die Schnellwechselbatterie in das Fahrzeug eingebaut ist;
wobei in dem ersten Einbauzustand die verbleibende Gesamtfahrmenge die Summe einer ersten verbleibenden Fahrsmenge der Schnellwechselbatterie und einer zweiten verbleibenden Fahrsmenge des Reichweitenverlängerers ist; und
wobei das Bestimmen einer Energieauffüllungslösung durch die Betriebsumschalteinheit gemäß Echtzeitinformationen des Fahrzeugs und den Verteilungsinformationen der Batteriewechselstationen und Kraftstoffnachfüllstationen entlang der Route der Langstreckenfahrt des Fahrzeugs umfasst:
(S206a), im ersten Einbauzustand, wenn die erste verbleibende Fahrmenge größer oder gleich der ersten erwarteten Fahrmenge ist und die verbleibende Gesamtfahrmenge größer oder gleich der erwarteten Gesamtfahrmenge ist, Bestimmen durch die Betriebsumschalteinheit, dass eine Energieauffüllung für das Fahrzeug nicht erforderlich ist; und
(S206b), wenn die erste verbleibende Fahrmenge größer oder gleich der ersten erwarteten Fahrmenge ist und die verbleibende Gesamtfahrmenge kleiner als die gesamte erwartete Fahrmenge ist, Bestimmen durch die Betriebsumschalteinheit, dass das Fahrzeug während der Fahrt zum Ziel mit Energie aufgefüllt werden muss, Bestimmen der entsprechenden Energieauffüllungslösung durch die Betriebsumschalteinheit und Anbieten der Energieauffüllungslösung durch die Betriebsumschalteinheit an den Benutzer.

2. Verfahren zum Auffüllen von Energie nach Anspruch 1, wobei
das Verfahren ferner einen Langstrecken-Batteriebetriebsmodus umfasst;
wobei das Bestimmen einer Energieauffüllungslösung und das Anbieten der Energieauffüllungslösung an den Benutzser gemäß Echtzeitinformationen des Fahrzeugs und den Verteilungsinformationen der Batteriewechselstationen und Kraftstoffnachfüllstationen entlang der Route der Langstreckenfahrt des Fahrzeugs umfassen:
wenn es nur wenige oder keine der Batteriewechselstationen in der empfohlenen Energieauffüllungslösung für die Langstreckenfahrt gibt, Empfehlen des Langstrecken-Batteriebetriebsmodus an den Benutzer, Auffordern des Benutzers, die Schnellwechselbatterie in einer nächstgelegenen Batteriewechselstation zu entfernen, und Fahren mit einer hohen Geschwindigkeit nach einer Gewichtsreduktion.

3. Verfahren zum Auffüllen von Energie nach einem der Ansprüche 1 bis 2, wobei
das Verfahren ferner einen Kurzstrecken-Batteriebetriebsmodus umfasst;
wobei das Bestimmen einer Energieauffüllungslösung und das Anbieten der Energieauffüllungslösung an den Benutzser gemäß Echtzeitinformationen des Fahrzeugs und den Verteilungsinformationen der Batteriewechselstationen und Kraftstoffnachfüllstationen entlang der Route der Langstreckenfahrt des Fahrzeugs umfassen:
wenn die Anzahl der Batteriewechselstationen groß ist oder eine tägliche Fahrstrecke in der empfohlenen Energieauffüllungslösung für die Kurzstreckenfahrt kurz ist, Empfehlen des Kurzstrecken-Batteriebetriebsmodus an den Benutzer, Auffordern des Benutzers, eine Schnellwechselbatterie mit einer hohen Kapazität in einer nächstgelegenen Batteriewechselstation zu entfernen und eine Schnellwechselbatterie mit einer niedrigen Kapazität, die auf die tägliche Fahrstrecke abgestimmt ist, einzubauen.

4. Verfahren zum Auffüllen von Energie nach Anspruch 1, wobei die erste erwartete Fahrmenge, die zweite erwartete Fahrmenge, die erste verbleibende Fahrmenge und die zweite verbleibende Fahrmenge in Kilometern oder Zeit ausgedrückt werden.

5. Verfahren zum Auffüllen von Energie nach Anspruch 1 oder 4, wobei das Bestimmen einer Energieauffüllungslösung gemäß Echtzeitinformationen des Fahrzeugs und den Verteilungsinformationen der Batteriewechselstationen und Kraftstoffnachfüllstationen entlang der Route der Langstreckenfahrt des Fahrzeugs weiterhin umfasst:
(S206c), im ersten Einbauzustand, wenn die erste verbleibende Fahrmenge größer oder gleich dem Produkt aus der ersten erwarteten Fahrmenge und einem voreingestellten Anteilsschwellenwert und kleiner als die erste erwartete Fahrmenge ist, und die verbleibende Gesamtfahrmenge größer oder gleich der gesamten erwarteten Fahrmenge ist, Bestimmen, dass die Schnellwechselbatterie des Fahrzeugs während der Fahrt von der aktuellen Position zum Ziel demontiert oder ersetzt werden muss;
(S206d), wenn die erste verbleibende Fahrmenge größer oder gleich dem Produkt aus der ersten erwarteten Fahrmenge und dem voreingestellten Anteilsschwellenwert und kleiner als die erste erwartete Fahrmenge ist, und die verbleibende Gesamtfahrmenge kleiner als der gesamten erwarteten Fahrmenge ist, Bestimmen, dass das Fahrzeug zum Kraftstoffnachfüllen zu einer Kraftstoffnachfüllstationen gefahren werden muss, die der aktuellen Position des Fahrzeugs am nächsten liegt; und
(S206e), wenn die erste verbleibende Fahrmenge geringer als das Produkt aus der ersten erwarteten Fahrmenge und dem voreingestellten Anteilsschwellenwert ist, Bestimmen, dass die Schnellwechselbatterie des Fahrzeugs während der Fahrt von der aktuellen Position zum Ziel demontiert oder ersetzt werden muss.

6. Verfahren zum Auffüllen von Energie nach 5, wobei
die Echtzeitinformationen des Fahrzeugs auch Straßenzustandsinformationen zwischen der aktuellen Position des Fahrzeugs und dem Ziel umfassen;
wobei vor das Bestimmen, dass die Schnellwechselbatterie des Fahrzeugs während der Fahrt demontiert oder ersetzt werden muss, umfasst das Verfahren außerdem Folgendes:
Bestimmung eines überlasteten Straßenabschnitts gemäß den Straßenzustandsinformationen; und
wobei das Bestimmen, dass die Schnellwechselbatterie des Fahrzeugs während der Fahrt demontiert oder ersetzt werden muss, umfasst:
Bestimmen, dass die Schnellwechselbatterie des Fahrzeugs während der Fahrt demontiert oder ersetzt werden muss, bevor das Fahrzeug den überlasteten Straßenabschnitt erreicht.

7. Verfahren zum Auffüllen von Energie nach einem der Ansprüche 1 bis 6, wobei der Batterieeinbauzustand des Fahrzeugs einen ersten Einbauzustand umfasst, der anzeigt, dass die Schnellwechselbatterie aus dem Fahrzeug demontiert ist;
wobei die Echtzeitinformationen des Fahrzeugs auch Straßenzustandsinformationen zwischen der aktuellen Position des Fahrzeugs und dem Ziel umfassen; und
wobei das Bestimmen einer Energieauffüllungslösung gemäß Echtzeitinformationen des Fahrzeugs und den Verteilungsinformationen der Batteriewechselstationen und Kraftstoffnachfüllstationen entlang der Route der Langstreckenfahrt des Fahrzeugs weiterhin umfasst:
(S402), im zweiten Einbauzustand, Beurteilen, ob ein Verkehr zwischen der aktuellen Position des Fahrzeugs und dem Ziel gemäß den Straßenzustandsinformationen glatt ist;
(S404), wenn der Verkehr zwischen der aktuellen Position des Fahrzeugs und dem Ziel nicht glatt ist, Bestimmen eines überlasteten Straßenabschnitts gemäß den Straßenzustandsinformationen und Erfassen einer vorhergesagten Staudauer des überlasteten Straßenabschnitts;
(S406), Beurteilen, ob die vorhergesagte Staudauer größer oder gleich einem voreingestellten Zeitschwellenwert ist, und wenn ja, (S408), Bestimmen, dass das Fahrzeug zu einer Batteriewechselstation fahren muss, um die Schnellwechselbatterie zu montieren, bevor es den überlasteten Straßenabschnitt erreicht.
(S410): Beurteilen, ob die verbleibende Gesamtfahrmenge größer oder gleich der erwarteten Gesamtfahrmenge ist, wenn der Verkehr zwischen der aktuellen Position des Fahrzeugs und dem Ziel glatt ist;
(S412), wenn die verbleibende Gesamtfahrmenge größer oder gleich der erwarteten Gesamtfahrmenge ist, Bestimmen, dass keine Energieauffüllung für das Fahrzeug erforderlich ist;
(S414), wenn die verbleibende Gesamtfahrmenge geringer als die erwartete Gesamtfahrmenge ist, Bestimmen, dass das Fahrzeug zum Kraftstoffnachfüllen zu einer Kraftstoffnachfüllstationen gefahren werden muss, die der aktuellen Position des Fahrzeugs am nächsten liegt, oder zu einer Batteriewechselstation gefahren werden muss, die der aktuellen Position des Fahrzeugs am nächsten liegt, um die Schnellwechselbatterie zu montieren.

8. Verfahren zum Auffüllen von Energie nach einem der Ansprüche 1 bis 7, wobei die verbleibende Gesamtfahrmenge des Fahrzeugs erhalten wird durch:
Erfassen einer verbleibenden Energiemenge und aktueller Fahrparameter des Fahrzeugs und Berechnen einer ursprünglichen verbleibenden Gesamtfahrmenge gemäß der verbleibenden Energiemenge und der aktuellen Fahrparameter; und
Erfassen von Benutzergewohnheitsparametern des Fahrzeugs und Korrigieren der ursprünglichen verbleibenden Gesamtfahrmenge gemäß den Benutzergewohnheitsparametern, um die verbleibende Gesamtfahrmenge zu erhalten.

9. Verfahren zum Auffüllen von Energie nach einem der Ansprüche 1 bis 8, wobei das verfahren vor das Bestimmen der erwarteten Gesamtfahrmenge des Fahrzeugs ferner umfasst:
Bestimmen des Ziels und eines erwarteten Fahrweges des Fahrzeugs anhand historischer Fahrdaten des Fahrzeugs und einer aktuellen Uhrzeit und/oder der aktuellen Position des Fahrzeugs.
wobei das Bestimmen der erwarteten Gesamtfahrmenge des Fahrzeugs umfasst:
Bestimmen der erwarteten Gesamtfahrmenge des Fahrzeugs in Abhängigkeit von der aktuellen Position des Fahrzeugs, dem Ziel, dem erwarteten Fahrweg und der Verteilung der Batteriewechselstationen und der Kraftstoffnachfüllstationen um das Ziel.

10. Managementsystem zum Auffüllen von Energie für ein Hybridfahrzeug vom Batterie-Ersatztyp (100), wobei das Fahrzeug mit einem Antriebssystem vom Batterie-Ersatztyp und einem Antriebssystem mit erweiterter Reichweite versehen ist, die schnell umgeschaltet und separat als Hauptantriebssystem verwendet werden können;
wobei das Antriebssystem mit erweiterter Reichweite einen Reichweitenverlängerer (10) und einen Antriebsmotor (31) umfasst;
wobei das Antriebssystem vom Batterie-Ersatztyp eine Schnellwechselbatterie (20) und den Antriebsmotor (31) umfasst, wobei die Schnellwechselbatterie an einer Batteriewechselstation schnell entnommen und ausgetauscht werden kann; und
wobei das Managementsystem zum Auffüllen von Energie umfasst:
eine Informationserfassungseinheit (81), die so konfiguriert ist, dass sie, wenn ein Benutzer das Fahrzeug startet, eine Echtzeitposition des Fahrzeugs erfasst und den Benutzer auffordert, eine Langstrecken- oder Kurzstreckenfahrt auszuwählen oder ein Ziel einzurichten; und
eine Betriebsumschalteinheit (82), die so konfiguriert ist, dass sie entsprechend der Auswahl des Benutzers intelligent zwischen dem Antriebssystem vom Batterie-Ersatztyp und/oder dem Antriebssystem mit erweiterter Reichweite umschaltet; wobei
die Betriebsumschalteinheit (82) ferner so konfiguriert ist, dass sie das Verfahren nach Anspruch 1 durchführt; und sie so konfiguriert ist, dass,
wenn die Kurzstreckenfahrt ausgewählt ist oder das Ziel innerhalb einer Kurzstreckenfahr-Reichweite liegt, Auslösen der Informationserfassungseinheit, um Verteilungsinformationen über Batteriewechselstationen in der Nähe des Fahrzeugs durch die Informationserfassungseinheit zu erfassen, wenn eine Batteriewechselstation vorhanden ist, Umschalten in einen Batterieaustauschmodus und Verwenden des Antriebssystems vom Batterie-Ersatztyp, und wenn nicht, Umschalten in einen Modus mit erweiterter Reichweite und Verwenden des Antriebssystems mit erweiterter Reichweite; und
wenn die Langstreckenfahrt ausgewählt ist oder das Ziel innerhalb einer Langstreckenfahrt-Reichweite liegt, Bestimmen einer erwarteten Gesamtfahrmenge für das Fahrzeug, und Bestimmen einer Energieauffüllungslösung und Anbieten derselben an den Benutzer gemäß Echtzeitinformationen des Fahrzeugs und den Verteilungsinformationen der Batteriewechselstationen und Kraftstoffnachfüllstationen entlang der Route der Langstreckenfahrt des Fahrzeugs,
wobei die Echtzeitinformationen des Fahrzeugs einen Batterieeinbauzustand und eine verbleibende Gesamtfahrmenge umfassen;
wobei die Energieauffüllungslösung aus Energieauffüllungslösungen mit einer Vielzahl von Preisintervallen besteht, die gemäß der Verteilung der Batteriewechselstation und der Kraftstoffnachfüllstationen, einem Echtzeit-Kraftstoffpreis und einem Echtzeit-Strompreis von niedrig bis hoch bestimmt werden und dem Benutzer zur Auswahl angeboten werden.

## Revendications

1. Procédé de réapprovisionnement en énergie pour un véhicule hybride de type de remplacement de batterie, dans lequel le véhicule est pourvu d'un système d'entraînement de type de remplacement de batterie et d'un système d'entraînement à autonomie étendue qui peuvent être commutés rapidement et utilisés séparément comme système d'alimentation principal ;
le système d'entraînement à autonomie étendue comprend un prolongateur d'autonomie et un moteur d'entraînement ;
le système d'entraînement de type de remplacement de batterie comprend une batterie à remplacement rapide et le moteur d'entraînement, et la batterie à remplacement rapide peut être rapidement retirée et remplacée à une station d'échange de batteries ; et
le procédé comprenant :
(S102), lorsqu'un utilisateur démarre sa véhicule, acquérir, par une unité d'acquisition d'informations, une position en temps réel du véhicule, et inciter, par l'unité d'acquisition d'informations, l'utilisateur à sélectionner une conduite à longue distance ou à courte distance ou à définir une destination ; et (S104), commuter de manière intelligente, par une unité de commutation de fonctionnement, entre le système d'entraînement de type de remplacement de batterie et/ou le système d'entraînement à autonomie étendue selon la sélection de l'utilisateur ; dans lequel
la (S104), commuter de manière intelligente, par l'unité de commutation de fonctionnement, entre le système d'entraînement de type de remplacement de batterie et/ou le système d'entraînement à autonomie étendue selon la sélection de l'utilisateur, comprend :
si la conduite à courte distance est sélectionnée ou si la destination se situe dans une portée de conduite à courte distance, acquérir, par l'unité d'acquisition d'informations, des informations de répartition des stations d'échange de batteries à proximité du véhicule, s'il existe une station d'échange de batteries, commuter, par l'unité de commutation de fonctionnement, à un mode de remplacement de batterie et utiliser le système d'entraînement de type de remplacement de la batterie, si non, commuter, par l'unité de commutation de fonctionnement, à un mode de autonomie étendue et utiliser le système d'entraînement à autonomie étendue ; et
si la conduite à longue distance est sélectionnée ou si la destination se situe dans une porte de conduite à longue distance, déterminer, par l'unité de commutation de fonctionnement, une quantité totale de conduite prévue du véhicule, et déterminer, par l'unité de commutation de fonctionnement, une solution de réapprovisionnement en énergie et la pousser, par l'unité de commutation de fonctionnement, à l'utilisateur en fonction des informations en temps réel du véhicule et des informations de répartition des stations d'échange de batteries et des stations de ravitaillement en carburant le long du trajet de la conduite à longue distance du véhicule,
les informations en temps réel du véhicule comprennent un état de montage de batterie et une quantité totale de conduite restante ;
la solution de réapprovisionnement en énergie comprend des solutions de réapprovisionnement en énergie d'une pluralité d'intervalles de prix déterminés de bas en haut en fonction de la répartition des stations d'échange de batteries et des stations de ravitaillement en carburant, un prix du carburant en temps réel et un prix de l'électricité en temps réel, qui sont fournis à l'utilisateur à sélectionner,
la quantité totale de conduite prévue comprend une première quantité de conduite prévue par laquelle le véhicule atteint la destination à partir de la position actuelle et une seconde quantité de conduite prévue par laquelle le véhicule atteint une station d'échange de batteries cible ou une station de ravitaillement en carburant cible autour de la destination à partir de la destination ; l'état de montage de batterie du véhicule comprend un premier état de montage indiquant que la batterie à remplacement rapide est montée sur le véhicule ;
dans le premier état de montage, la quantité totale de conduite restante est la somme d'une première quantité de conduite restante de la batterie à remplacement rapide et d'une seconde quantité de conduite restante du prolongateur d'autonomie ; et
l'étape de déterminer, par l'unité de commutation de fonctionnement, la solution de réapprovisionnement en énergie en fonction des informations en temps réel du véhicule et des informations de répartition des stations d'échange de batteries et des stations de ravitaillement en carburant le long du trajet de la conduite à longue distance du véhicule comprend :
(S206a), dans le premier état de montage, si la première quantité de conduite restante est supérieure ou égale à la première quantité de conduite prévue et si la quantité totale de conduite restante est supérieure ou égale à la quantité totale de conduite prévue, déterminer, par l'unité de commutation de fonctionnement, que le réapprovisionnement en énergie n'est pas nécessaire pour le véhicule ; et
(S206b), si la première quantité de conduite restante est supérieure ou égale à la première quantité de conduite prévue et la quantité totale de conduite restante est inférieure à la quantité totale de conduite restante, déterminer, par l'unité de commutation de fonctionnement, que le véhicule doit être réapprovisionné en énergie pendant la conduite vers la destination, déterminer,
par l'unité de commutation de fonctionnement, la solution de réapprovisionnement en énergie correspondante et pousser, par l'unité de commutation de fonctionnement, la solution de réapprovisionnement en énergie à l'utilisateur.

2. Procédé de réapprovisionnement en énergie selon la revendication 1, dans lequel,
le procédé comprend en outre un mode de fonctionnement de batterie à longue distance ;
l'étape de déterminer une solution de réapprovisionnement en énergie et la pousser à l'utilisateur en fonction des informations en temps réel du véhicule et des informations de répartition des stations d'échange de batteries et des stations de ravitaillement en carburant le long du trajet de la conduite à longue distance du véhicule comprend :
si 'il y a peu ou pas de stations d'échange de batterie dans la solution de réapprovisionnement en énergie recommandée pour la conduite à longue distance, recommander le mode de fonctionnement de la batterie à longue distance à l'utilisateur, inciter l'utilisateur à retirer la batterie à remplacement rapide dans une station d'échange de batteries la plus proche et conduire à grande vitesse après une réduction de poids.

3. Procédé de réapprovisionnement en énergie selon l'une quelconque des revendications 1 à 2, dans lequel,
le procédé comprend en outre un mode de fonctionnement de batterie à longue distance ;
l'étape de déterminer une solution de réapprovisionnement en énergie et la pousser à l'utilisateur en fonction des informations en temps réel du véhicule et des informations de répartition des stations d'échange de batteries et des stations de ravitaillement en carburant le long du trajet de la conduite à longue distance du véhicule comprend :
si le nombre de stations d'échange de batterie est important ou si le kilométrage quotidien est court dans la solution de réapprovisionnement en énergie recommandée pour la conduite à courte distance, recommander le mode de fonctionnement de batterie à courte distance à l'utilisateur, inciter l'utilisateur à retirer une batterie à remplacement rapide de grande capacité dans une station d'échange de batteries la plus proche et monter une batterie à remplacement rapide de faible capacité en fonction du kilométrage de conduite quotidien.

4. Procédé de réapprovisionnement en énergie selon la revendication 1, dans lequel la première quantité de conduite prévue, la seconde quantité de conduite prévue, la première quantité de conduite restante et la seconde quantité de conduite restante sont exprimées en kilométrage ou en temps.

5. Procédé de réapprovisionnement en énergie selon la revendication 1 ou 4, dans lequel l'étape de déterminer la solution de réapprovisionnement en énergie en fonction des informations en temps réel du véhicule et des informations de répartition des stations d'échange de batteries et des stations de ravitaillement en carburant le long du trajet de la conduite à longue distance du véhicule comprend en outre :
(S206c), dans le premier état de montage, si la première quantité de conduite restante est supérieure ou égale à un produit de la première quantité de conduite prévue par un seuil de proportion prédéfini et inférieure à la première quantité de conduite prévue et si la quantité totale de conduite restante est supérieure ou égale à la quantité totale de conduite prévue, déterminer que la batterie à remplacement rapide du véhicule doit être démontée ou remplacée au cours de la conduite de la position actuelle à la destination ;
(S206d), si la première quantité de conduite restante est supérieure ou égale au produit de la première quantité de conduite prévue par le seuil de proportion prédéfini et inférieure à la première quantité de conduite prévue et si la quantité totale de conduite restante est inférieure à la quantité totale de conduite prévue, déterminer que le véhicule doit être conduit à la station de ravitaillement en carburant la plus proche de la position actuelle du véhicule pour un ravitaillement ; et
(S206e), si la première quantité de conduite restante est inférieure au produit de la première quantité de conduite prévue par le seuil de proportion prédéfini, déterminer que la batterie à remplacement rapide du véhicule doit être démontée ou remplacée au cours de la conduite de la position actuelle à la destination.

6. Procédé de réapprovisionnement en énergie selon la revendication 5, dans lequel,
les informations en temps réel du véhicule comprennent également des informations d'état de la route entre la position actuelle du véhicule et la destination ;
avant de déterminer que la batterie à remplacement rapide du véhicule doit être démontée ou remplacée au cours de la conduite, le procédé comprend en outre :
déterminer une section de route embouteillée en fonction des informations d'état de la route ; et
l'étape de déterminer que la batterie à remplacement rapide du véhicule doit être démontée ou remplacée au cours de la conduite comprend :
déterminer que la batterie à remplacement rapide du véhicule doit être démontée ou remplacée avant que le véhicule n'atteigne la section de route embouteillée.

7. Procédé de réapprovisionnement en énergie selon l'une quelconque des revendications 1 à 6, dans lequel l'état de montage de batterie comprend en outre un second état de montage indiquant que la batterie à remplacement rapide est démontée du véhicule ;
les informations en temps réel du véhicule comprennent également des informations d'état de la route entre la position actuelle du véhicule et la destination ; et
l'étape de déterminer la solution de réapprovisionnement en énergie en fonction des informations en temps réel du véhicule et des informations de répartition des stations d'échange de batteries et des stations de ravitaillement en carburant le long du trajet de la conduite à longue distance du véhicule comprend en outre :
(S402), dans le second état de montage, juger si une route entre la position actuelle du véhicule et la destination est fluide dans la circulation selon les informations d'état de la route ;
(S404), si la route entre la position actuelle du véhicule et la destination n'est pas fluide dans la circulation, déterminer une section de route embouteillée en fonction des informations d'état de la route et obtenir une durée d'embouteillage prévue de la section de route embouteillée ;
(S406), juger si la durée d'embouteillage prévue est supérieure ou égale à un seuil de temps prédéfini, et si oui, (S408), déterminer que le véhicule doit être conduit à une station d'échange de batteries pour monter la batterie à remplacement rapide avant d'atteindre la section de route embouteillée ;
(S410), si la route entre la position actuelle du véhicule et la destination est fluide dans la circulation, juger si la quantité totale de conduite restante est supérieure ou égale à la quantité totale de conduite prévue ;
(S412), si la quantité totale de conduite restante est supérieure ou égale à la quantité totale de conduite prévue, déterminer que le réapprovisionnement en énergie n'est pas nécessaire pour le véhicule ; et
(S414), si la quantité totale de conduite restante est inférieure à la quantité totale de conduite prévue, déterminer que le véhicule doit être conduit à la station de ravitaillement en carburant la plus proche de la position actuelle du véhicule pour le ravitaillement, ou conduit à une station d'échange de batteries la plus proche de la position actuelle du véhicule pour monter la batterie à remplacement rapide.

8. Procédé de réapprovisionnement en énergie selon l'une quelconque des revendications 1 à 7, dans lequel la quantité totale de conduite restante du véhicule est obtenue par :
acquérir une quantité d'énergie restante et les paramètres de conduite actuelle du véhicule, et calculer une quantité totale de conduite restante d'origine en fonction de la quantité d'énergie restante et des paramètres de conduite actuelle ; et
acquérir des paramètres d'habitude d'utilisateur du véhicule et corriger la quantité totale de conduite restante d'origine en fonction des paramètres d'habitude d'utilisateur pour obtenir la quantité totale de conduite restante.

9. Procédé de réapprovisionnement en énergie selon l'une quelconque des revendications 1 à 8, avant de déterminer la quantité totale de conduite prévue du véhicule, comprenant en outre :
déterminer la destination et un trajet de conduite prévue du véhicule en fonction des données de conduite historique du véhicule et d'une heure actuelle et/ou de la position actuelle du véhicule ;
l'étape de déterminer la quantité totale de conduite prévue du véhicule comprend :
déterminer la quantité totale de conduite prévue du véhicule en fonction de la position actuelle du véhicule, de la destination, du trajet de conduite prévue et de la répartition des stations d'échange de batteries et des stations de ravitaillement en carburant autour de la destination.

10. Système de gestion de réapprovisionnement en énergie pour un véhicule hybride de type de remplacement de batterie (100), dans lequel le véhicule est pourvu d'un système d'entraînement de type de remplacement de batterie et d'un système d'entraînement à autonomie étendue qui peuvent être commutés rapidement et utilisés séparément comme système d'alimentation principal ;
le système d'entraînement à autonomie étendue comprend un prolongateur d'autonomie (10) et un moteur d'entraînement (31) ;
le système d'entraînement de type de remplacement de batterie comprend une batterie à remplacement rapide (20) et le moteur d'entraînement (31), et la batterie à remplacement rapide peut être rapidement retirée et remplacée à une station d'échange de batteries ; et
le système de gestion de réapprovisionnement en énergie comprenant :
une unité d'acquisition d'informations (81) configurée pour, lorsqu'un utilisateur démarre son véhicule, acquérir une position en temps réel du véhicule, et inciter l'utilisateur à sélectionner une conduite à longue distance ou à courte distance ou à définir une destination ; et
une unité de commutation de fonctionnement (82) configurée pour, selon la sélection de l'utilisateur, commuter de manière intelligente entre le système d'entraînement de type de remplacement de batterie et/ou le système d'entraînement à autonomie étendue ; dans laquelle l'unité de commutation de fonctionnement (82) est configurée en outre pour mettre en œuvre le procédé selon la revendication 1 et configurée pour :
si la conduite à courte distance est sélectionnée ou si la destination se situe dans une portée de conduite à courte distance, activer l'unité d'acquisition d'informations pour acquérir des informations de répartition des stations d'échange de batteries à proximité du véhicule, s'il existe une station d'échange de batteries, commuter à un mode de remplacement de batterie et utiliser le système d'entraînement de type de remplacement de la batterie, si non, commuter à un mode de autonomie étendue et utiliser le système d'entraînement à autonomie étendue ; et
si la conduite à longue distance est sélectionnée ou si la destination se situe dans une porte de conduite à longue distance, déterminer une quantité totale de conduite prévue du véhicule, et déterminer une solution de réapprovisionnement en énergie et la pousser à l'utilisateur en fonction des informations en temps réel du véhicule et des informations de répartition des stations d'échange de batteries et des stations de ravitaillement en carburant le long du trajet de la conduite à longue distance du véhicule,
dans lequel les informations en temps réel du véhicule comprennent un état de montage de batterie et une quantité totale de conduite restante ;
la solution de réapprovisionnement en énergie comprend des solutions de réapprovisionnement en énergie d'une pluralité d'intervalles de prix déterminés de bas en haut en fonction de la répartition des stations d'échange de batteries et des stations de ravitaillement en carburant, un prix du carburant en temps réel et un prix de l'électricité en temps réel, qui sont fournis à l'utilisateur à sélectionner.
